(19) **Europäisches Patentamt / European Patent Office / Office européen des brevets**

(11) **EP 1 297 334 B1**

(12) **EUROPEAN PATENT SPECIFICATION**

(45) Date of publication and mention
of the grant of the patent:
**22.02.2012 Bulletin 2012/08**

(51) Int Cl.:
*G01N 15/14* (2006.01)    *G01N 1/10* (2006.01)
*B01L 3/14* (2006.01)    *H04L 25/06* (2006.01)

(21) Application number: **01937695.3**

(22) Date of filing: **24.05.2001**

(86) International application number:
**PCT/US2001/016814**

(87) International publication number:
**WO 2001/094938 (13.12.2001 Gazette 2001/50)**

(54) **METHOD OF USING A FLOW CYTOMETRY-BASED HEMATOLOGY SYSTEM**

METHODE ZUR VERWENDUNG EINES AUF FLUSSZYTOMETRIE BASIERENDEN HAEMATOLOGISCHEN SYSTEMS

PROCÉDÉ D'UTILISATION D'UN SYSTEME D'ANALYSE DU SANG PAR CYTOMETRIE DE FLUX

(84) Designated Contracting States:
**AT BE CH CY DE DK ES FI FR GB GR IE IT LI LU MC NL PT SE TR**

(30) Priority: **02.06.2000 US 208849 P**
**17.11.2000 US 715593**

(43) Date of publication of application:
**02.04.2003 Bulletin 2003/14**

(73) Proprietor: **IDEXX LABORATORIES, INC.**
**Westbrook, ME 04092 (US)**

(72) Inventors:
• **ROCHE, John, W.**
**Scarborough, ME 04074 (US)**
• **HANSEN, W., Peter**
**Canaan, NY 12029 (US)**
• **JULIAN, Marcus, F.**
**Medford, MA 02155 (US)**
• **FLYNN, Harold, C., Jr.**
**Scarborough, ME 04074 (US)**
• **RUSSELL, James, W.**
**North Yarmouth, ME 04097 (US)**
• **COLEMAN, Michelle, L.**
**Yarmouth, ME 04096 (US)**

• **CREWS, Harold, R.**
**Coral Springs, FL 33071 (US)**

(74) Representative: **Grey, Ian Michael et al**
**Venner Shipley LLP**
**200 Aldersgate**
**London EC1A 4HD (GB)**

(56) References cited:
EP-A- 0 887 637       WO-A1-99/20789
US-A- 5 093 234       US-A- 5 217 704
US-A- 5 492 833       US-A- 5 540 494
US-A- 5 798 827       US-A- 5 874 310
US-A- 5 874 311       US-A- 6 067 157

• VOGT R F ET AL: "MODEL SYSTEM EVALUATING FLUORESCEIN-LABELED MICROBEADS AS INTERNAL STANDARDS TO CALIBRATE FLUORESCENCE INTENSITY ON FLOW CYTOMETERS" CYTOMETRY, ALAN LISS, NEW YORK, US, vol. 10, no. 3, 1989, pages 294-302, XP009015111 ISSN: 0196-4763
• Y. R. KIM, L. ORNSTEIN: "Isovolumetric sphering of erythrocytes for more accurate and precise cell volume measurment by flow cytometry" CYTOMETRY, vol. 3, no. 6, 1 June 1983 (1983-06-01), pages 419-427, XP002358325

**EP 1 297 334 B1**

**Description**

This invention relates in general to bioparticle analysis, and more specifically to a method of analyzing a blood sample on a blood-derived sample using a flow cytometry-based hematology system. Such a system employs a set of selected features which, in combination, provide at least a complete blood count, a five-part differential white blood cell count, and a reticulocyte count in a system that is small, reliable, and inexpensive enough to be well suited for use in small clinical laboratories, doctor's offices, veterinarian offices, and the like.

Mammalian peripheral blood usually contains three major classifications of blood cell types - red blood cells ("RBCs"), white blood cells ("WBCs"), and platelets ("PLT"). These cells are suspended in a solution referred to as plasma, which contains many different proteins, enzymes, and ions. The functions of the plasma components encompass blood coagulation, osmolality maintenance, immune surveillance, and a multitude of other functions.

Mammals usually have anywhere from $2\text{-}10\times10^{12}$ RBCs per liter. RBCs are responsible for oxygen and carbon dioxide transport within the circulatory system. In many mammals, including humans, normal mature red cells have a bi-concave cross-sectional shape and lack nuclei. RBCs can range in diameter between 4 and 9 microns, depending on the species, and have a thickness that is generally less than 2 microns. Within the RBCs is a protein known as hemoglobin, which performs the dual roles of oxygen and carbon dioxide transport and which is present at a very high concentration. Hemoglobin is responsible for the overall red colour of blood, due to the presence of iron in the molecule. In the present application, the terms "erythrocytes", "red blood cells", "red cells", and "RBCs" are used interchangeably to refer to the hemoglobin-containing blood cells present in the circulation as described above.

Besides the normal RBCs, more immature forms of red blood cells can often be found in peripheral blood samples. The slightly immature form of RBCs is referred to as a reticulocyte, and the very immature forms are broadly classified as nucleated red blood cells (NRBCs). Almost all non-mammalian animals have exclusively nucleated RBCs in their blood.

A reticulocyte is a red blood cell precursor that has completed most of the normal cell development stages in bone marrow, and has expelled its nucleus. The last portion remaining to leave the reticulocyte before it becomes a truly mature RBC is transfer RNA. The detection of reticulocytes is important in clinical evaluation of a patient's ability to produce new red blood cells. The reticulocyte count also can be used to distinguish among different types of anemia. In anemia, red cell production is diminished to the point where it can no longer keep up with red cell removal, and as a result the overall red blood cell count and hematocrit are low. The presence of an increased number of reticulocytes in these patients provides evidence that the bone marrow is functioning, and attempting to make up for the red blood cell deficit. If there is a small number or no detectable reticulocytes in these patients, the bone marrow is not adequately responding to the red blood cell deficit.

White blood cells (WBCs) exist in peripheral blood in very low concentrations as compared to red blood cells. Normal concentrations of these cells range from $5\text{-}15\times10^{9}$ per liter, which about is three orders of magnitude less than red blood cells. These cells are generally larger than RBCs, having diameters between 6 to 13 microns, depending on the type of white cell and the species. Unlike RBCs, there are a variety of white blood cell types that perform different functions within the body. In this application, the terms "white blood cells", "white cells", and "WBCs" are used interchangeably to refer to the non-hemoglobin-containing nucleated blood cells present in the circulation as described above.

Measurements of the numbers of white blood cells is important in the detection and monitoring of a variety of physiological disorders. Elevated numbers of abnormal white blood cells are a sign of leukemia, which is an uncontrolled proliferation of a myelogenous or a lymphogenous cell. Neutrophilia, or greatly increased numbers of neutrophils, is an indication of inflammation or tissue destruction in the body, by whatever cause.

White blood cells may be broadly classified as either granular or agranular. Granular cells, or granulocytes, are further subdivided into neutrophils, eosinophils, and basophils. Agranular white cells are sometimes referred to as mononuclear cells, and are sub-classified into lymphocytes and monocytes. Measurements of these two major WBC sub-classifications (granulocytes and mononuclear cells) make up what is referred to as a two-part WBC differential count (or two-part differential). Measurements of the components of these subclassifications (neutrophils, eosinophils, basophils, lymphocytes, and monocytes), produce a five-part WBC differential count (or five-part differential).

Neutrophils are the most prevalent of the five major classes of white cells, usually making up a little over half of the total number of white blood cells. Neutrophils are so named because they contain granules within their cytoplasm, which can be stained with a neutral pH stain. These cells have a relatively short life span, on the order of a day or less. Neutrophils attack and destroy invading bacteria, and other foreign agents in the tissues or circulating blood as part of the body's immune response mechanisms.

Eosinophils are the next most prevalent of the granulocytes, behind the neutrophils, but generally account for less than five percent of the total number of white blood cells. Eosinophils also contain granules within their cytoplasm, which can be stained with an eosin stain. Like neutrophils, these cells do not exist for long periods of time in the peripheral blood. Eosinophils play a part in the body's immune response mechanisms that are usually associated with allergies or parasitic infections.

Basophils are the least common of the granulocytes, and the least common of all the five classifications of WBCs. As they are granulocytes, they contain granules within their cytoplasm which can be stained, in this case using a basic (high pH) stain. These cells also are known to play a role in the body's immune response mechanisms, but the specifics are not certain.

Lymphocytes are the most prevalent of the mononuclear cell types, and generally make up between 20 and 30 percent of the total number of white blood cells. Lymphocytes have no granules in their cytoplasm, and their nucleus occupies a large majority of the cell volume. The thin area of cytoplasm of lymphocytes can be stained, as it contains RNA. Lymphocytes circulate in the peripheral blood, leave the circulation as part of the body's immune response mechanism, and eventually return to the peripheral blood. Many lymphocytes are relatively long-lived cells.

Monocytes are immature forms of macrophages that, in themselves, have little ability to fight infectious agents in the circulating blood. However, when there is an infection in the tissues surrounding a blood vessel, these cells leave the circulating blood and enter the surrounding tissues. When this happens, the monocytes undergo a dramatic transformation to form macrophages, increasing their diameters as much as fivefold and developing large numbers of mitochondria and lysosomes in their cytoplasm. The macrophages then attack the invading foreign objects by phagocytosis and activation of other immune system cells, such as T cells. Increased numbers of macrophages are a signal that inflammation is occurring in the body.

Platelets are found in all mammalian species, and are involved in homeostasis. Normal animals will generally have between $1\text{-}5\text{x}10^{11}$ platelets per liter. These cellular particles are usually much smaller than RBCs, having a diameter between 1 and 3 $\mu$m. Platelets are formed as buds from the surfaces of megakarocytes, very large cells found in the bone marrow that do not themselves leave the marrow to enter the blood circulation. Rather, the buds pinch off and enter the circulation as platelets. Like RBCs, platelets lack nuclei and thus cannot reproduce. Functionally, platelets act to aggregate so as to plug or repair small holes in blood vessels. In the case of larger holes, platelet aggregation acts as an early step in clot formation. As a result, platelet count and function are clinically very important. Abnormally low platelet counts may be the cause of a clotting disorder.

Collectively, the counting and sizing of RBCs, the counting of WBCs, and the counting of platelets is referred to as a complete blood count (CBC). The categorizing of white blood cells into the five major classifications, expressed as a percent basis, is referred to as a five-part differential. The categorizing of red blood cells into two classifications, mature red blood cells and reticulated red blood cells, on a percent basis is referred to as a reticulocyte count.

The determination of a CBC, with a 5-part differential and a reticulocyte count, is a common diagnostic procedure performed to diagnose, track and treat an abundance of ailments. These tests make up the great majority of hematology analyses that are performed in human and animal clinical laboratories around the world. These three tests can all be performed using a microscope, centrifuge, counting chamber, slide, and appropriate reagents. However, the skills necessary to perform these test manually are rare and take years of training. Furthermore, the time required to perform each of these tests manually is very high. As a result, significant automation via instrumentation has been pursued in this field since the early 1950's, when the first Coulter impedance cell counters appeared.

An impedance counter consists of two chambers filled with a saline solution and connected via a small orifice. In the presence of a constant voltage across the orifice, cells passed individually through the orifice displace a volume of saline solution and thereby increase the impedance of the orifice. The size of the cell can be related to the voltage pulse generated by passage of the cell through the orifice. As a result, when a cell passes through the orifice, its presence and size can be determined from the resulting voltage pulse.

As impedance technology evolved, automated cell counters were developed that were able to count RBCs, WBCs, and platelets simultaneously on the same instrument, based on the different sizes of these classes of cells. This automation proved to be a great labor savings for hospital laboratories. However, these systems were unable to distinguish among all the different types of white blood cells, and thus were unable to provide a five-part differential count. Furthermore, these instruments were also unable to distinguish between reticulocytes and normal red blood cells, and thus could also not provide a reticulocyte count.

Flow cytometry is a powerful method of analysis to determine the cellular content of various types of samples, and in particular samples that contain living cells. In clinical applications, flow cytometers are useful for lymphocyte counting and classification, for immunological characterization of leukemias and lymphomas, and for cross-matching tissues for transplants. In most flow cytometry techniques, cells in a fluid solution are caused to flow individually through a light beam, usually produced by a laser light source. As light strikes each cell, the light is scattered and the resulting scattered light is analyzed to determine the type of cell. The cell may also optionally be labeled with a marker linked to a fluorescent molecule, which fluoresces when light strikes it and thereby reveals the presence of the marker on the cell. In this fashion, information about the surface components of the cell can be obtained. Examples of such fluorescent molecules include FITC (fluorescein isothiocyanate), TRITC (tetramethyl rhodamine isothiocyanate), Texas Red (sulforhodamine 101), and PE (phycoerythrin). In addition, intracellular components of the cell, such as nucleic acids, may be stained, and subsequently detected by fluorescence. Examples of such compounds include ethidium bromide, propidium iodide, YOYO-1, YOYO-3, TOTO-1, TOTO-3, BO-PRO-1, YO-PRO-1, and TO-PRO-1.

Blood cell measurements made using flow cytometry often employ two separate measurements - one to measure the RBCs and platelets, and the other to measure the much less common WBCs. The reason for separate measurements is that the RBCs are much more common than other blood cell types, and thus detection of other cell type in the presence of RBCs requires that the RBCs either be removed or large volumes of sample be measured. Alternatively, these cells may be distinguished on the basis of immunochemical staining of particular cell surface antigens and/or differential cell type staining. Thus, in U.S. Patent No. 5,047,321 (Loken et al.), a single step method for the analysis of blood cells employs at least two fluorescent dyes and a labeled cell marker to differentiate among the cells. However, unless two separate dilutions of the same sample are performed, the method still requires large volumes of sample to provide sufficient statistical data with regard to the less common blood components.

Light scattering measurements are widely used in flow cytometry to measure cell sizes and to distinguish among several different types of cells. It is known that incident light is scattered by cells at small angles (approximately 0.5 - 20°) from the line traveled by the incident light that interrogates the cells, and that the intensity of the scattered light is proportional to the cell volume. The light scattered at small angles is referred to forward scattered light. Forward scattered light (also called forward light scatter, or small-angle scatter for angles of scatter between 0.5 - 2.0°) is useful in determining cell size. The ability to measure cell sizes is influenced by the wavelength employed and the precise range of angles over which light is collected. For example, material within the cells having a strong absorption at the illuminating wavelength may interfere with the size determination because cells containing this material produce smaller forward scatter signals than would otherwise be expected, leading to underestimates of cell size. In addition, differences in refractive index between the cells and the surrounding medium may also influence the small-angle scatter measurements.

Different cell types may be distinguished on the basis of the amount of orthogonal light scatter (or right angle side scatter) they produce. Cells having a high degree of granularity, such as blood granulocytes, scatter incident light at high angles much more than cells with low granularity, such as lymphocytes. As a result, forward and right angle side scatter measurements are commonly used to distinguish among different types of blood cells, such as red blood cells, lymphocytes, monocytes, and granulocytes. Additionally, eosinophils may be distinguished from neutrophils and other lymphocytes and other granulocytes on the basis of polarization measurement of right angle side scatter. Normally, incident polarized light is scattered orthogonally and remains polarized. However, eosinophils cause incident polarized light scattered orthogonally to become depolarized to a greater degree than other cells. This higher degree of depolarization permits the specific identification of eosinophil populations in blood samples. Copending U.S. Patent Application 09/507,515, filed February 18, 2000, discloses an improved high numerical aperture flow cytometer that employs a high angle side scatter light detector to detect eosinophils in a blood sample. The use of a high angle side scatter light detector (at angles of about 130°) enables greater discrimination of eosinophils in blood cell populations. However, in contrast to conventional systems, the system described in copending U.S. Patent Application No. 09/507,515 does not require the incident light to be unpolarized

U.S. Patent No. 5,492,833 (Rodriguez et al.) discloses a method for distinguishing erythrocytes from reticulocytes by treating the cells with a ghosting reagent, followed by measuring light scatter. U.S. Patent No. 5,559,037 (Kim et al.) discloses a method for counting nucleated red blood cells (NRBCs) by first lying red blood cells, then exposing the NRBCs to a nuclear stain and measuring fluorescence and light scatter. U.S. Patent No. 5,733,784 (Studholme et al.) teaches a method for measuring the reticulocyte concentration in a blood sample that employs a reticulocyte staining reagent that is incubated for a period between 15 minutes and 4 hours before light scatter measurements are taken. U.S. Patent No. 5,879,900 (Kim et al.) discloses a method for simultaneous and quantitative analysis of damaged WBCs, NRBCs, and WBC subpopulations that employs multi-dimensional light scatter and fluorescence measurements. U.S. Patent No. 5,891,734 (Gill et al.) discloses a system for differentiating blood cells in a blood sample that aspirates a portion of blood and mixes it with a fluorescent reagent, then automatically runs the stained sample through a flow cytometer and measures multi-angle light scatter and fluorescence.

To obtain meaningful information about the numbers and types of cells in the sample, or of the concentration of markers on cell surfaces, the samples must be standardized with respect to the amount of light scatter, fluorescence or impedance associated with standardized populations of the cells. In addition, the flow cytometry instrument itself must be calibrated to ensure proper performance. Calibration of the instrument is typically accomplished by passing standard particles through the instrument, and measuring the resulting scatter, fluorescence, or impedance. Flow cytometers may be calibrated with either synthetic standard materials (e.g., polystyrene beads) or with cells or other biological material (e.g., pollen or stained nuclei). These standardization materials are made to be extremely uniform in size, and to contain precise amounts of fluorescent molecules to serve in calibrating the photomultiplier tubes used in detection of fluorescent probes. However, the calibration procedures are lengthy and complicated, and require extensive training to perform properly. Furthermore, these calibration procedures are typically performed once at the beginning of the analysis. Changes in the instrument, i.e., drift, or in the sample may alter the performance of the instrument. Accordingly, there is a need for a means to perform automatic machine calibration of flow cytometers that removes the requirement for skilled manual calibration, and which can adjust the calibration as needed to account for changes in the instrument with time and with differences in samples, so that optimal performance of the instrument may be achieved for each sample measured.

US Patent No. 5,627,037 (Ward et al.) discloses a one-step method for determining absolute numbers of one or more populations of reticulocytes and/or leukocytes in a whole blood sample, using flow cytometry. The method comprises mixing a blood sample with a diluent, wherein the diluent contained a fixative, one or more fluorescent cell markers and a known number of fluorescent microparticles per unit volume, and thereafter analyzing the sample by flow cytometry. The fluorescence due to the microparticles must be distinguishable from that due to the cell markers. The flow cytometer is run with a fluorescence trigger set such that all the cells and the microparticles exceed the trigger level. The events then are reanalyzed under conditions where the microparticles are distinguishable from the cell markers. The number of microparticles and the number of cells (as determined by the number of cell markers) are then counted. The number of cells and the number of microparticles provides a ratio that can be used, knowing the number of microparticles per unit volume and the total sample volume, to calculate the absolute number of cells in the whole blood sample. However, the method described in US Patent No. 5,627,037 relies on two analytical steps to provide the absolute number of cells per sample, and does not teach or suggest that the flow cytometer could be simultaneously standardized using the microparticles included in the sample.

US Patent No. 5,380,663 (Schwartz et al.) discloses a method for calibrating a flow cytometer, which employs combined populations of fluorescent microbeads and a software program matched to each combined population of microbeads. Each microbead batch contains at least two different populations of fluorescent microbeads, and each population has a different fluorescence intensity. The software program contains information on the fluorescence intensity of each population of microbeads within the batch. The software program monitors the fluorescent microbeads for fluorescence degradation, and alerts the operator when the fluorescence intensity falls below acceptable levels. The method does not provide a means to automatically standardize samples so that variability in measurements due to differences among flow cytometers is reduced or eliminated.

US Patent No. 5,451,525 (Shenkin et al.) discloses a method for determining the total number of cells in a sample, that does not require a known sample volume. The method employs a known number of discrete particles which are added to a blood specimen before the specimen is assayed in a flow cytometer. By counting the added particles and the cells, and relating the number of counted particles to the number of added particles, the number of cells in the entire blood sample can then be determined without need to measure the volume of the sample measured. Because the volume of the sample measured is unknown, the method disclosed is incapable of determining whether the proper sample dilutions have been made. The method further does not disclose an automatic means to calibrate the instrument to ensure that the variability in measurements due to differences among flow cytometers is reduced or eliminated.

Flow cytometry techniques using light scattering characteristics of cells were applied by Technicon beginning in the early 1970's to perform white cell differential analysis, in combination with CBC determination. Automated reticulocyte analysis was developed in the 1980s on Becton-Dickinson and Coulter fluorescent flow cytometry systems. However, these early systems did not perform a CBC or white blood cell differential. Eventually, manufacturers like Technicon (Bayer), Coulter (Beckman-Coulter) and Abbott incorporated reticulocyte counting with their automated CBC / white cell differential systems, in such high-end hematology systems as the Technicon (Bayer) H*3, Bayer Advia 120, Coulter STKS, Coulter Genesis, and Abbotts CellDyn 3500 and CellDyn 4000. These instrument systems were capable of measuring all of the parameters for a complete hematology analysis that are clinically important for patient assessment, namely, CBC, five-part WBC differential and reticulocyte count. However, these instruments typically employ complex and expensive optical systems. Furthermore, high-end hematology systems are designed to be high-throughput machines, so often multiple different specimen samples are being processed simultaneously, requiring different combinations of treatments and analyses. Analysis of red blood cells and white blood cells require different reagent systems, and are often optimized in a way that requires completely different hydraulic paths. As a result, to simultaneously perform both red blood cell and white blood cell analyses, completely separate and distinct hydraulic paths are created for each type of sample. This combination of multiple simultaneous sample hydraulic paths creates undesirably high complexity, due to the use of large numbers of valves, vacuum lines, reaction chambers, syringes, and the like.

In addition, a significant amount of training is required to learn how to use these instruments properly, and these instrument systems require service several times a year, at a minimum. As a result, the high costs associated with purchasing, using and maintaining these high-end instruments make them financially inaccessible to small clinics and doctor's offices. Doctors can get access to these instrument by utilizing commercial laboratories that will pick up the blood samples from the clinic or doctor's office and transport the samples back to the laboratory for analysis on these high end hematology systems. The results are then sent to the doctor. This process is very time-consuming, and more often than not the doctor will not have the results until the next day, at the least.

Thus, if a doctor desires a complete hematology assessment (CBC, five-part WBC differential, and reticulocyte count) quickly, the in-office laboratory must use some combination of manual methods. Instrumentation, such as impedance counters that perform CBC with limited WBC differentials, are available for these in-clinic laboratories, but systems that can produce five-part differentials and reticulocyte counts are not. Thus, to obtain values for these parameters, manual methods are employed. These manual methods, however, are slow, labor-intensive, and prone to operator error.

The low-end impedance counters available to the clinics and doctor's offices includes such systems as the Abbott 1200, ABX Micros, and the Sysmex K-21. While the high-end hematology systems improved by incorporating flow cytometric techniques and other advances, the technology used in the low-end systems has changed very little. These low-end units have become much more compact and efficient through incorporation of semiconductor microelectronics where applicable; however, in the end these systems are functionally no different from the Coulter instruments used by clinical laboratories in the late 1970's and early 1980's. In particular, these instruments still cannot perform a five-part WBC differential, nor can they produce a reticulocyte count.

Low-end impedance instruments used in small clinics and doctor's offices generally use bulk reagent packs that are intended for larger laboratories. Since the number of samples run on these instruments is low compared to their laboratory counterparts, significant volumes of reagents are wasted in performing startup and shutdown cycles, as well as in system cleanings between samples. Thus it is impossible to predict how many patient samples a user will get from a reagent pack. As a result, the user must maintain an excess amount of reagents on hand, leading inevitably to a substantial degree of reagent waste. In addition, the hydraulics of these instruments, though generally less complex than the high-end laboratory systems, are still prone to the same reliability issues associated with tubing, numerous valves, vacuum pumps, and the small dimensions of the apertures used to count cells. Thus for in-clinic and in-office applications, low-end impedance instruments are severely deficient in producing the results needed for complete hematology analyses, are very inefficient users of reagents, and have the same inherit reliability problems that are associated with high-end biological fluid analysis systems.

Some attempts have been made to address the clinical blood sample analysis needs of small laboratories and doctor's offices, but these efforts have met with only limited success. For example, the QBC® technology, developed by Becton-Dickinson, does not require flow cytometry or other expensive technology. The only moving part required is a centrifuge to force the cellular components of blood to layer in an oversized, precisely bored capillary tube. Inside the capillary tube, a plastic 'float' that is precisely manufactured for size and density characteristics establishes density equilibrium within the white blood cell and platelet layers, thereby expanding the layers ten fold. This allows for fairly accurate estimations of the platelet count, WBC count, and a two-part (granular and agranular) WBC differential, as well as a very accurate measurement of hematocrit. The QBC® system does not utilize any liquid reagents, and is therefore very reliable. This method is also a unit dose method, in that a single capillary tube and float are used for each analysis. As a result, there is no wasted reagent.

While the QBC® technology does address concerns of reliability and reagent waste for the in-clinic user, it falls well short of delivering the required parameters for a CBC, produces an incomplete differential, and does not quantify reticulocytes. Additionally, the precision and accuracy of the parameters produced by the QBC® system, except for hematocrit, are worse than those of the low-end impedance systems. Consequently, there remains a great need for an inexpensive biological fluid analysis system that is capable of producing the parameters that are relied upon by clinicians and doctors in making decisions that affect the treatment of a large percentage of their patients.

To address the need for hematology parameters that are beyond the capability of low-end impedance instruments in an in-clinic setting, several major factors have to be addressed. The size, cost and complexity associated with high-end hematology systems must be reduced, while retaining the ability to perform high numbers of complete blood analyses. The major sub-systems that contribute to the cost and complexity of the high-end hematology systems are the optics design and the fluid handling design, as well as the reagent systems.

To reduce the size of the laser optical system, incorporation of a laser diode over a gas laser significantly reduces the total package size. Furthermore, a laser diode can also reduce the cost of the laser system. However, laser diodes do not have the optical characteristics of gas lasers. They are astigmatic, and have temperature-dependent noise regions, which are referred to as "mode-hopping". This mode-hopping noise makes detection of small particles such as platelets very difficult. Controlling the temperature of the laser diode to a quiet thermal area can reduce this mode-hopping problem. This can be accomplished by a variety of temperature feedback systems, such as a thermal electric cooler, which keeps the temperature of the diode laser in a very narrow temperature range. However, any type of thermal control is costly, especially since the laser diode itself is a source of heat. Thus even the act of turning on the diode laser causes mode-hopping effects until thermal equilibrium is reached, which could take five to ten minutes.

Other than the laser light source, there is significant costs and complexity associated with beam shaping, and light collection optics for flow cytometry type instruments.

Beam shaping optics are generally intended to take a circular gausian laser beam, and create an ellipse where the power distribution is both more intense and more evenly distributed over the area of interest. Many hematology instruments use a collimated approach, with the tails of the gaussian curve being blocked by an aperture. This creates a top hat effect, which gives uniformity over the region of interest, and reduces the need for fluidic control, and laser pointing stability, but sacrifices power density at the cell. Furthermore, to create a very thin beam that is sub-cellular in size (<4 microns), which is useful for time-of-flight measurements, the traditional approach has been to first expand the initial laser beam, so that it may then be focused to a small spot size. Both the expansion step and the focusing step are accomplished using various optical elements, such as lenses, beamsplitters, and mirrors. In these cases significant costs are incurred by having many optical components. In addition to the high cost of making each of these components, each optical component incurs further costs in that each one needs to be held securely in space, and carefully aligned.

Light collection optics in flow cytometer systems are even more complex than the beam shaping optics. This is because in almost all applications, more than one measurement of light is made. To accomplish this, two or more detection sources are needed. Each detector requires several optic components that steer light from the area of interest to the detector. As in the beam shaping case, significant costs are incurred by the requirement for numerous optical components, each of which needs to be held in space and carefully aligned.

It is known from US 5093234 to provide a vessel for use in a flow cytometry-based hematology system comprising a closed tube, a known number of reference particles in said tube, each of said reference particles having a predetermined diameter such that when said reference particles are illuminated by light, said light is scattered by said reference particles such that said scattered light falls into at least one of a plurality of predetermined light scatter channels.

The invention is defined by the claims.

This specification discloses a method comprising a step of providing a consumable vessel for use in a system that employs a selected set of features that, in combination, create a device that is capable of producing a complete hematology analysis. The system is a flow cytometer that includes a lensless optical detection system for collection of light emitted from a laser light source, after interacting with a cell or particle. The laser light source is a standard diode laser light source that is shaped to produce a thin line, as disclosed in US Patent No. 6612719. The shape of the laser light beam is well-suited for the detection of scattered light. Furthermore, the reliability of the system is further enhanced by use of a photodetector array that does not include any moving parts, nor require any lenses. The photodetector array is such that the scattered light is detectable, and this data collected provides a complete hematological analysis, when used in combination with a high numerical aperture technique. The consumable vessels act as reaction chambers, mixing chambers, and waste chambers for the blood sample analyses. The consumable vessels incorporate latex particles or the like (fixed cells), which act as internal standards to ensure that the dilutions made during processing of the samples have been carried out correctly. The use of these consumable vessels results in less waste and greatly improved accuracy and validation of the results.

Embodiments of the invention will now be described, by way of example only, and with reference to the accompanying drawings, in which:

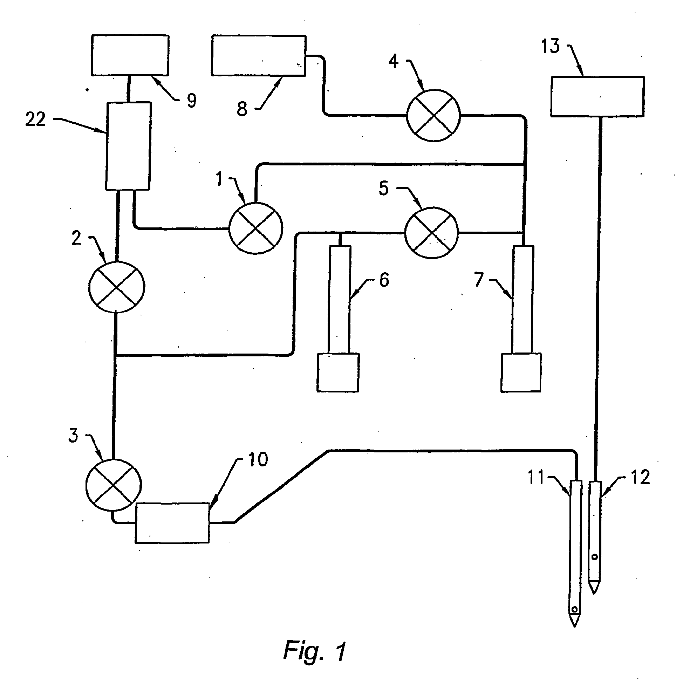

Figure 1 is a schematic representation of the system hydraulics, which shows the systems valves (1,2,3,4,5), syringes (6,7), bulk reagent bottles (8,9), and other major components of a flow cytometry system, that comprises the vessel of the present invention;

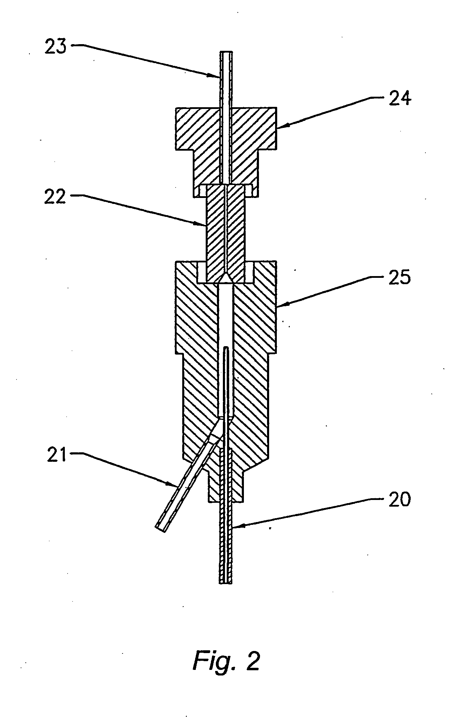

Figure 2 is a drawing of the flow cell assembly used in the optical detection system of the flow cytometry system of Figure 1. This contains three tubing ports (20,21,23) which allow laminar flow through the quartz flow channel (22) where the laser interacts with the cells.

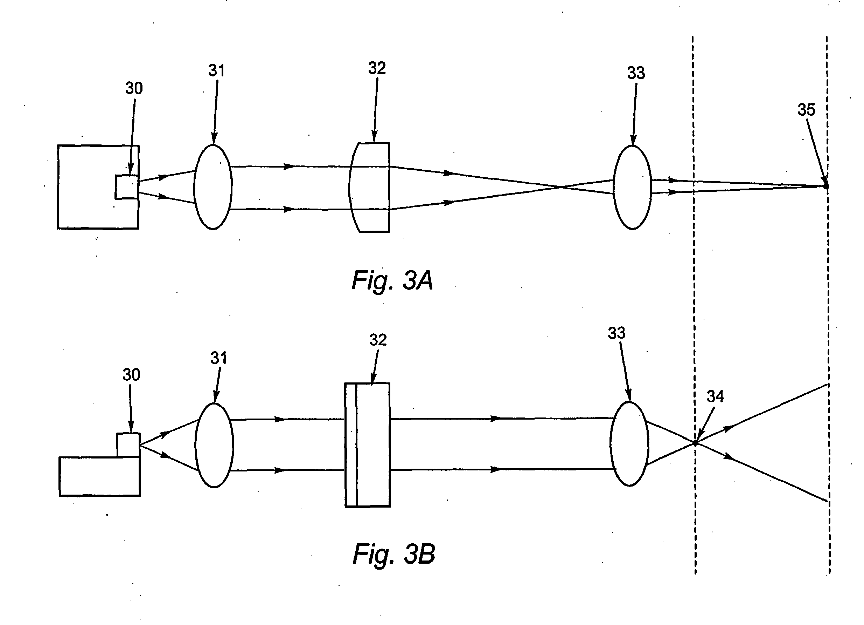

Figures 3A and 3B are schematic representations of the laser beam shaping optics. Figure 3A give a top view representation, and Figure 3B gives a side view representation. The raw laser diode, 30, emits light that is diverging in two separate axis's. A collimating lens, 31, eliminates the divergence in both axis's, and illuminates lens 32. Lens 32 acts to converge the beam in one axis such that nearly all of the light from the laser beam may pass through the width of the flow channel of 22. W represents this width. A third lens, 33 is introduced between 32 and W, such that it produces a sharp focus at W. The focal point of lens 33 is the desired intersection of laser light, and the particle or cell of interest. The focal point of lens 32 is the desired plane to place photodetectors to measure scatter parameters, as this is where the laser has converged to it's smallest point in that axis.

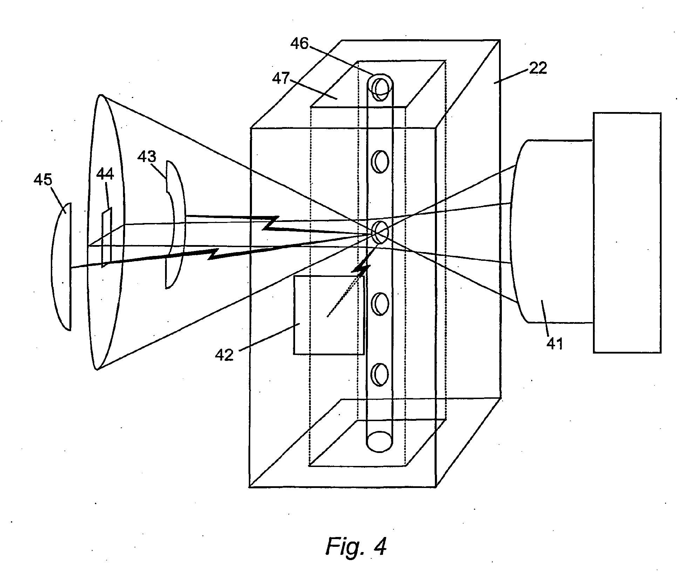

FIG 4 is an illustration of the cell detection system, which shows cells or particles flowing through 22, which is held in space around at least two, but preferably four photodiode detectors, without any collection or imaging lenses. These detectors collect orthogonal scatter, 42, low angle forward scatter, 45, axial light loss or extinction, 44, and high angle forward scatter, 43. Laser light is illuminated on 22 via 41, which contains the beam shaping optics of figure 3.

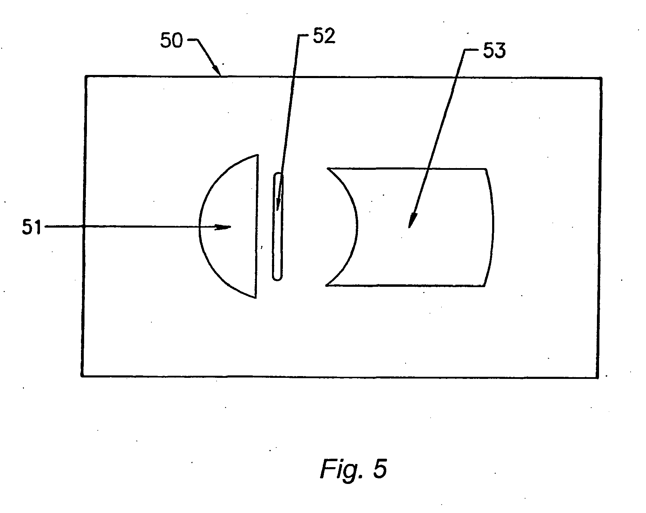

FIG 5 is a drawing of the photodiode mask which accommodate three independent optical measurements in the forward direction of the laser. Low angle forward scatter is masked by 51, axial light loss by 52, and high angle forward scatter by 53. These three areas can be on a single fabrication 50, of semiconductor material where only the desired geometry is an active part of the semiconductor material. Other approaches would have 50 being a metal mask that could sit over three discrete photodiodes.

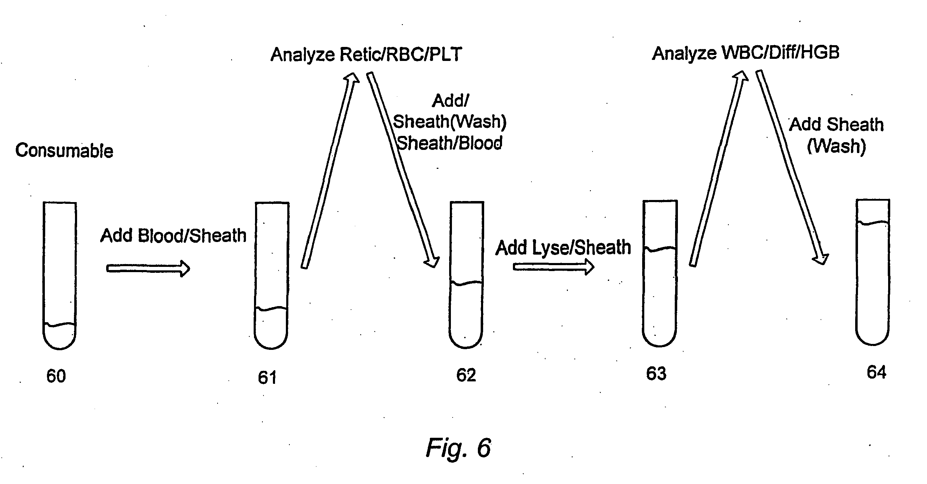

FIG 6 is a schematic representation of what happens in the consumable or vessel of the invention during the system cycle. The consumable tube, 60, starts with a small amount of method reagent, to which precisely metered amounts of whole blood via 6, or other unknown material is added with the systems sheath fluid, from 8, via 7, though the hydraulic needle 11. This creates 60, which is then analyzed through the optics of Figure 4. To create 62, more whole blood or other unknown material is added to the consumable tube. To analyzer white blood cells a lytic agent and sheath fluid are added to create 63, which is then analyzed with the optics of figure 4. Finally, the hydraulic lines are cleaned by back flushing into the consumable tube to create 64, which is now a waste tube.

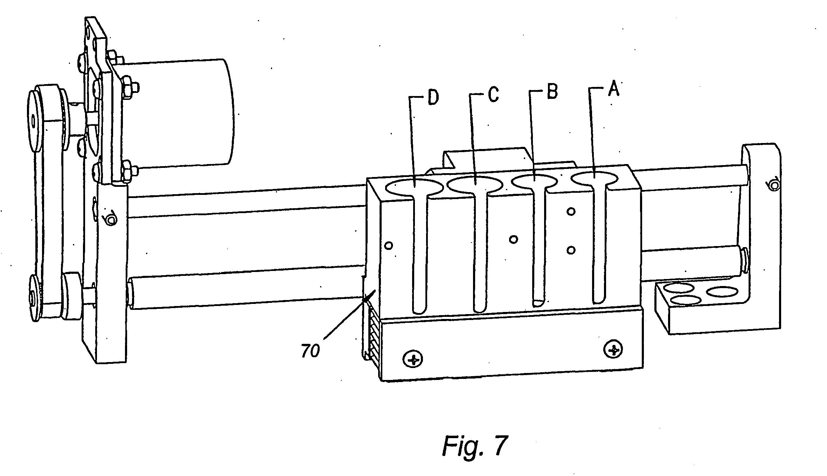

FIG 7 is drawing of the tube positioning assembly that moves the tubes shown in Fig 6. Four test tubes can be simultaneously held. Slot A, is intended for the patient sample of whole blood, or other type of appropriate specimen. Slot B is intended for the consumable tube depicted in Figure 6. Slot C is for a tube containing lyse that stays in aboard the system in slot C, for numerous runs of consumables (one per kit of greater than 20, ideally 50 consumables). Slot D is for an on board cleaner tube, that is also intended to act a primer tube, to properly position of fluids at system start up.

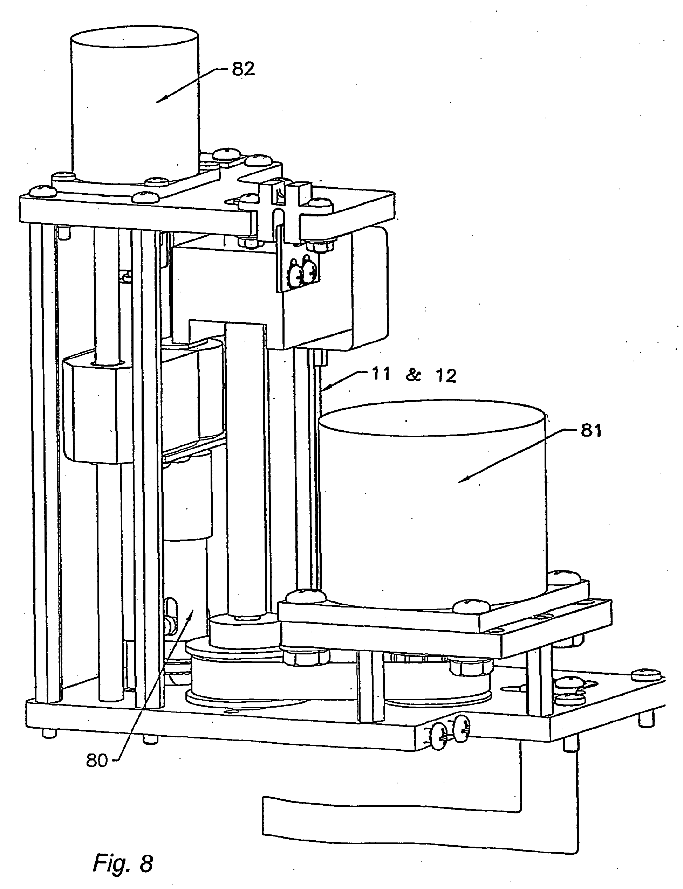

FIG 8 is a drawing of the mixing and piercing assembly. To accomplish making the dilutions depicted in Figure 6, the tube slots of Figure 7 are moved between a piercing station where the needles 11 and 12 are simultaneously inserted into stoppered test tubes by means of a motor 81. When a fluid is injected into a tube by syringe 6 or 7, through needle 11, needle 12 vents the pressure change to an air filter 13, which is at atmospheric pressure. Once the new solution is created in the consumable, the carriage of Figure 7, moves the consumable under 80, where by through the use of several motors, including 82, the consumable is mix, making the solution inside it homogenous.

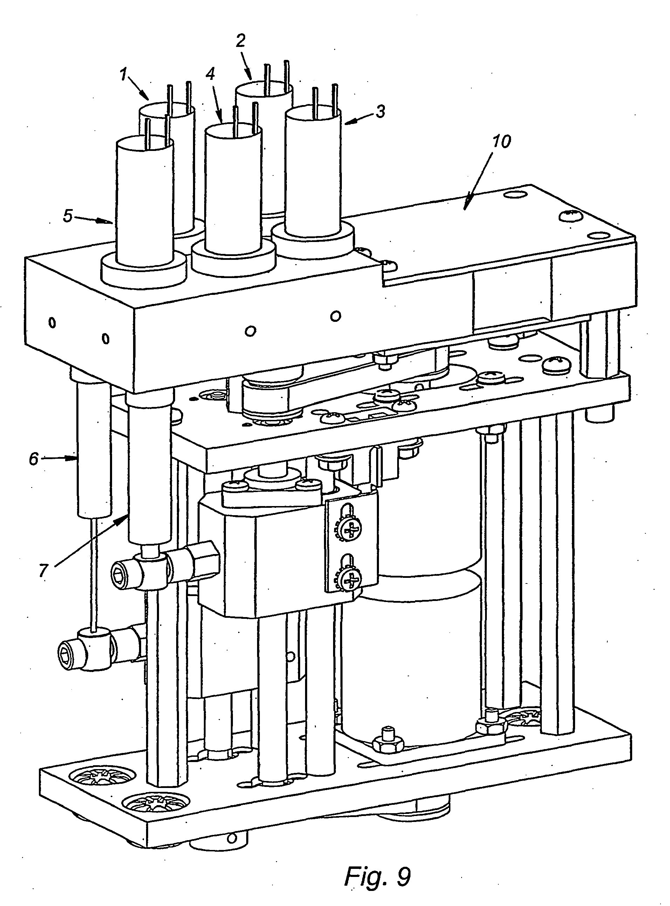

FIG 9 is a drawing of the system shown in Figure 1. A manifold block holds valves that have appropriate hydraulic paths, and integrates the syringes and the motor drive mechanic.

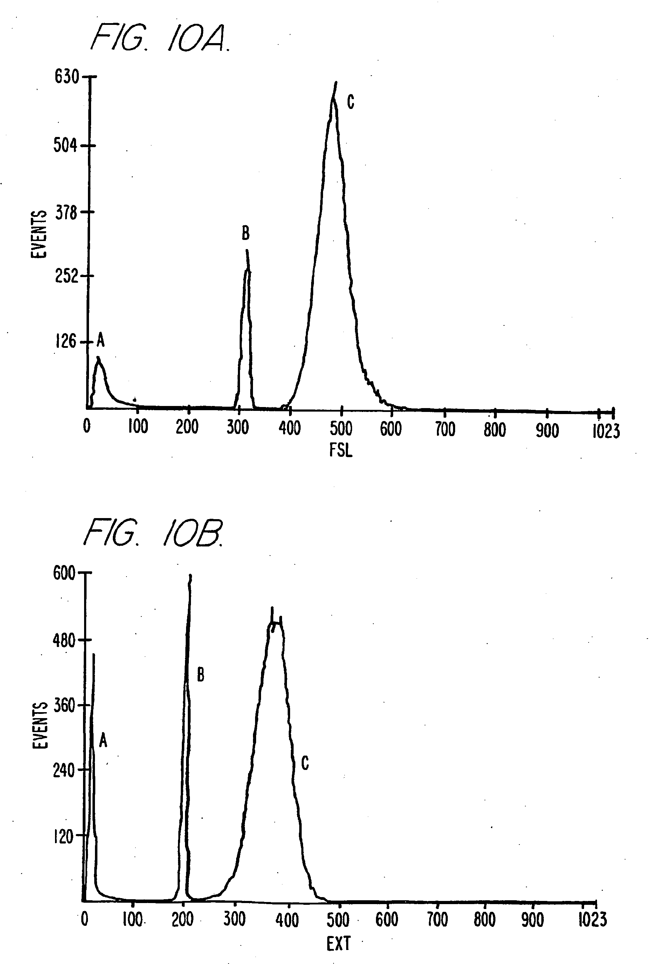

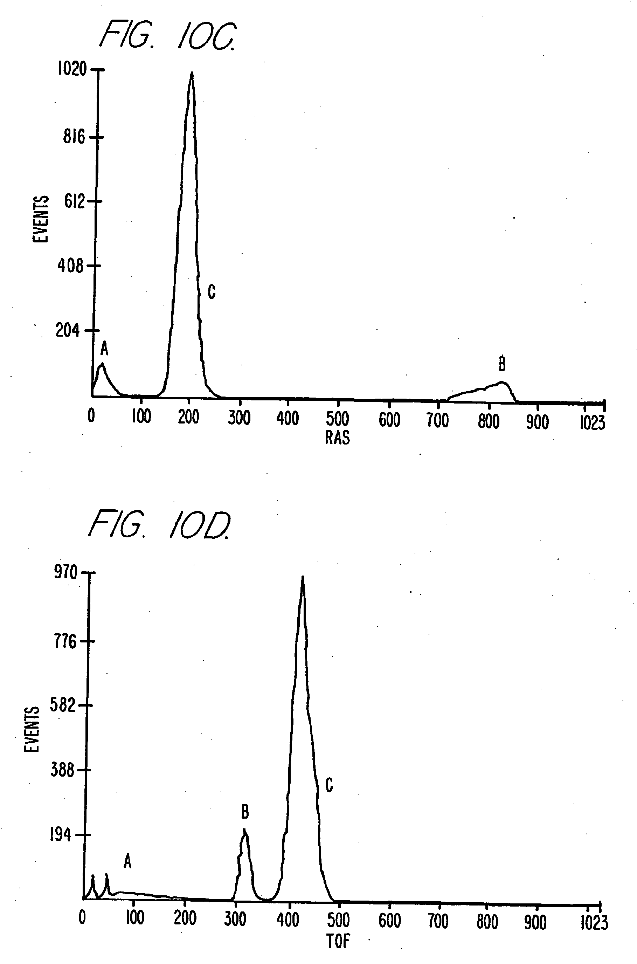

FIG 10 displays red cell (C), platelet (A) and latex (B) histogram data obtained from the system. Figure 10 A depicts histogram data of the digitized forward scatter high channel, 43, on the x-axis (0 through 1023, or 8 bits) versus the number of events (or occurrences) collected for each of the individual channels. Figure 10 B shows the same data run, except it depicts the extinction or axial light loss channel, 44. Figure 10 C shows the same data run, except it depicts the right angle scatter channel., 42. Figure 10 D shows the same data run, except it depicts the time of flight, or pulse width measurement. Pulse width measurements can be made off of any of the other channels that utilize a photodetector, but it is preferred to use either extinction, 44, or forward scatter low, 45.

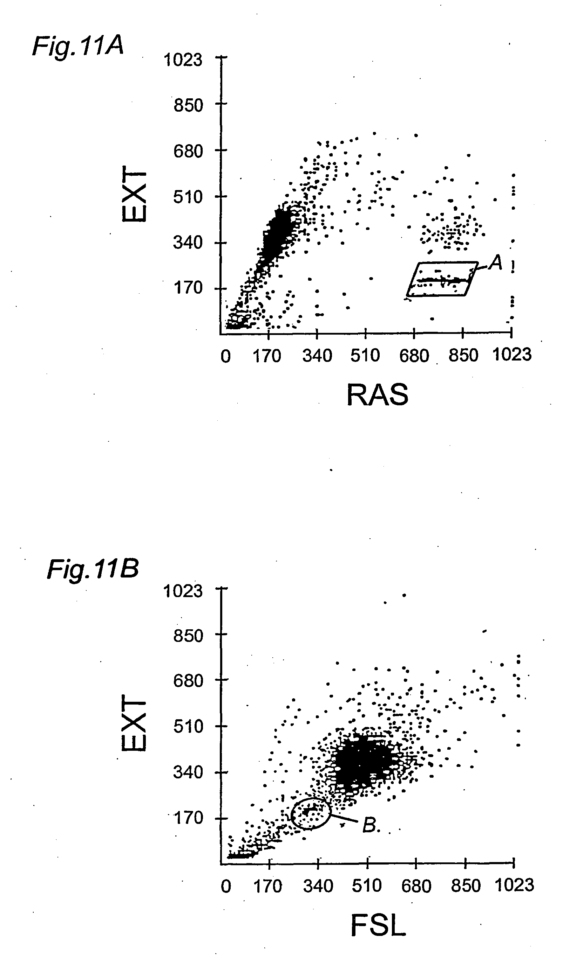

FIG 11 displays the same red cell, platelet and latex data from Figure 10, except in scatter-plot form. Scatter plots are simply a representation of data that is collected simultaneously from a cell or particle, from one measurement, plotted on the x-axis, against an other measurement plotted on the γ-axis. Latex particles are distinguishable in A in Figure 11 A, and in B in figure 11 B.

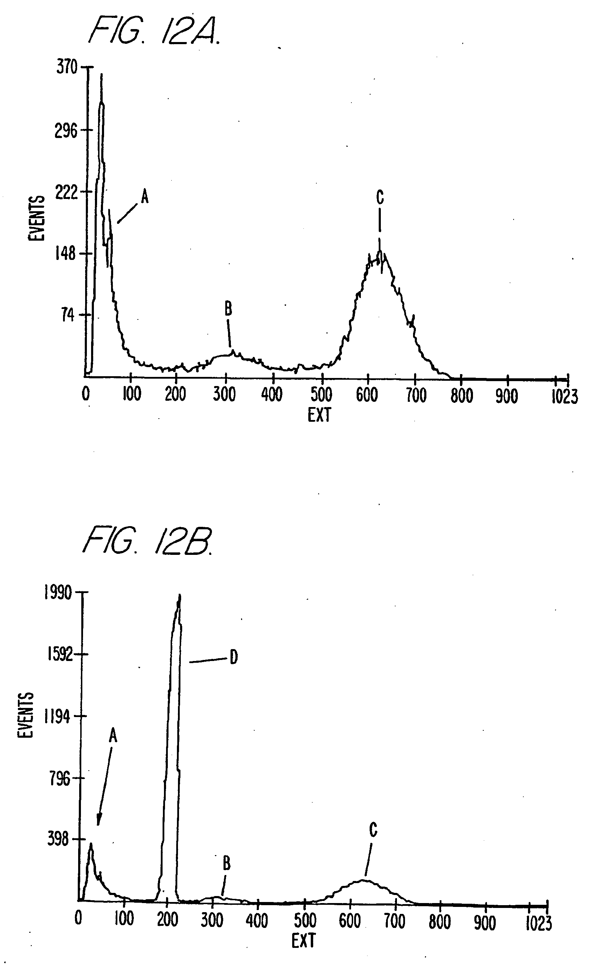

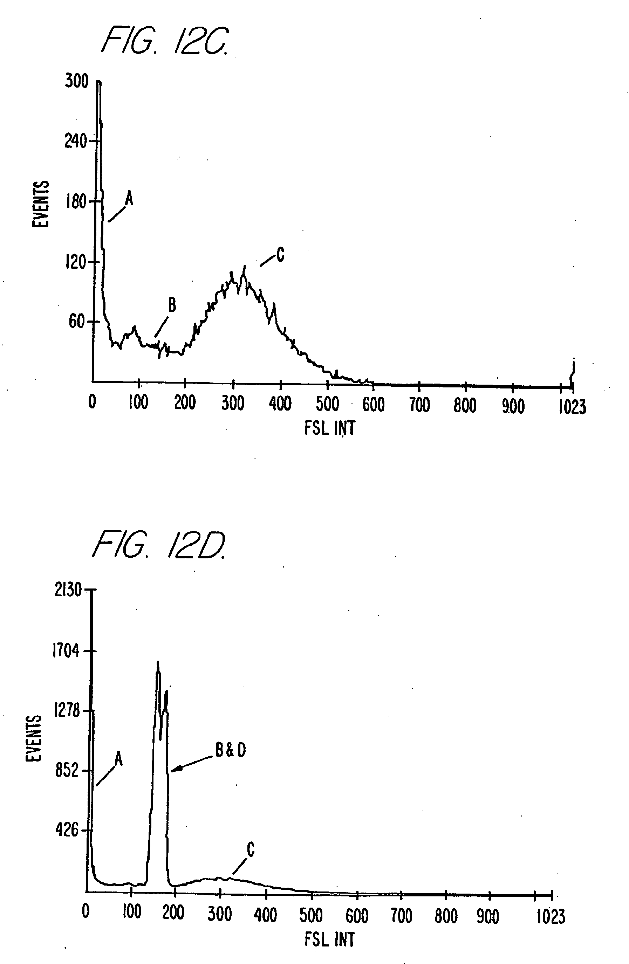

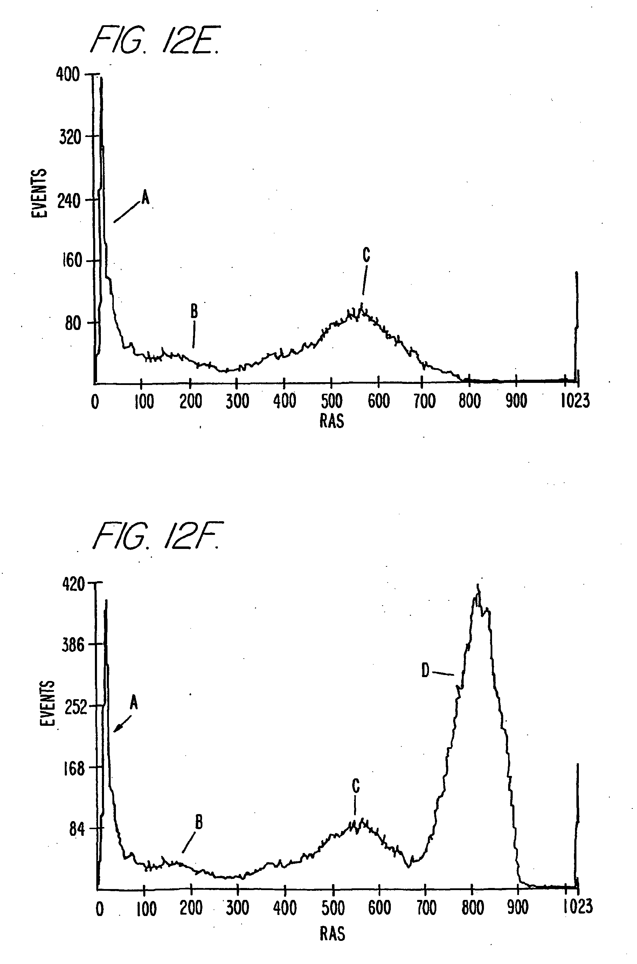

FIG 12 A displays white cell histogram data for the extinction channel which clearly show three populations, A are the lymphocytes, B are the monocytes and C are the granulocytes. Figure 12 B shows the same patient sample, except this run of data incorporated latex particles. Again, A are the lymphocytes, B are the monocytes and C are the granulocytes. The latex particles are indicated by D, and are easily distinguished from the white cells. Figure 12 C and 12 E show the same patient sample for the parameter of forward scatter low 12 C, and right angle scatter 12 E, without latex particles added. Figures 12 D and 12 F show the same patient sample for the parameters of forward scatter low 12 D, and right angle scatter 12 F, with latex particles added.

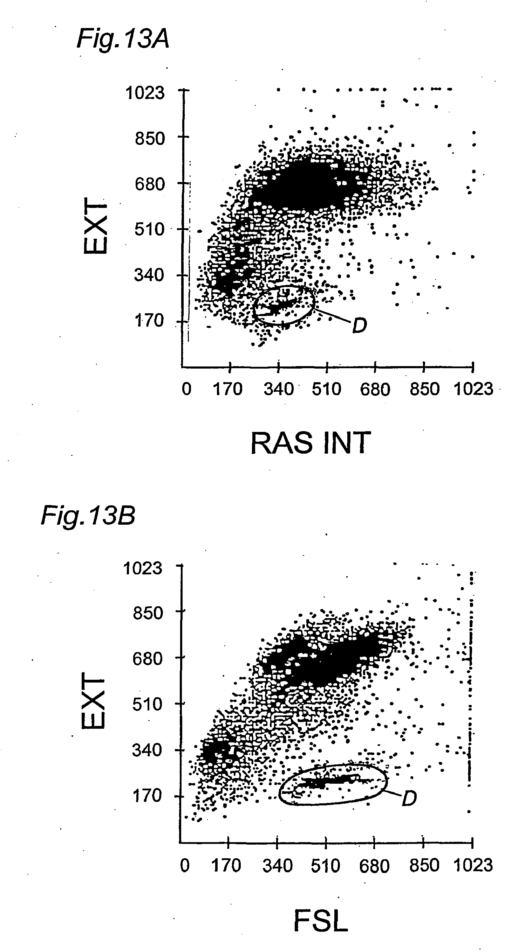

FIG 13 A and 13 B displays the same white cell and latex data from figure 12 B, 12 D and 12 F, except in scatter-plot form.

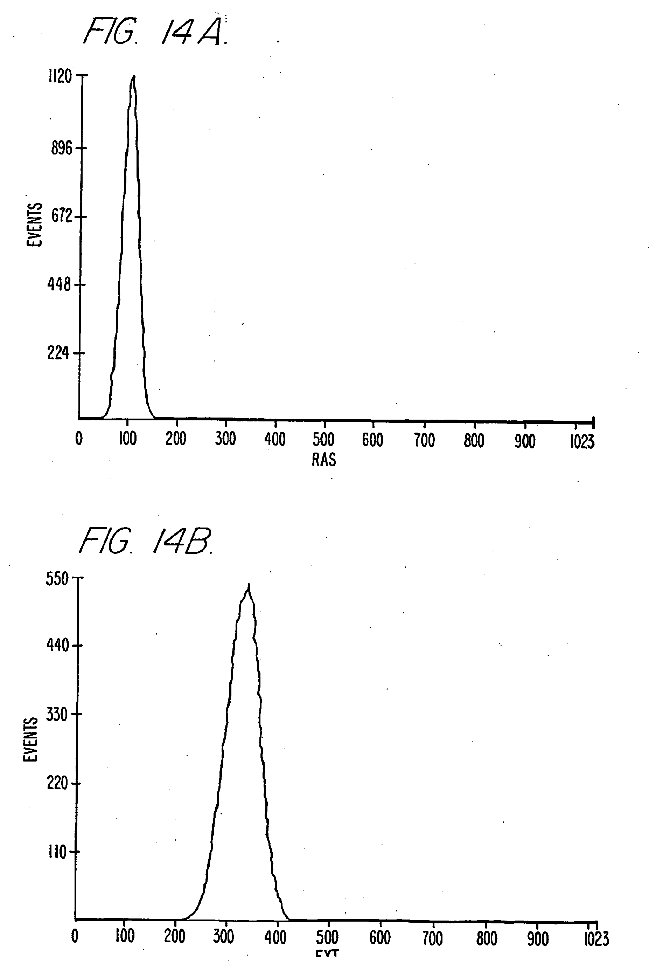

FIG 14 displays red cell and reticulocyte histogram data for right angle scatter, Figure 14 A, and for extinction, Figure 14 B obtained from the system.

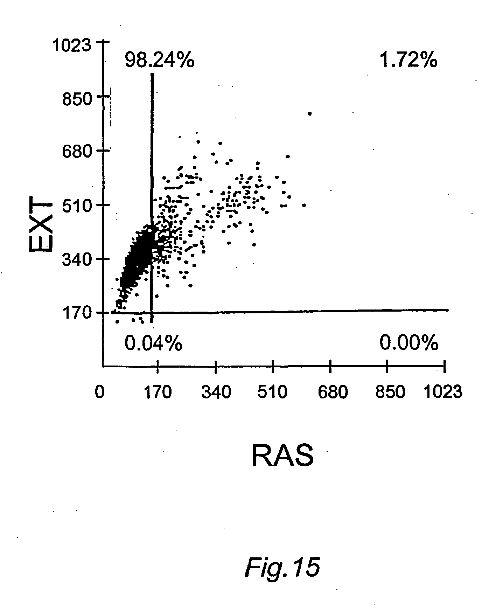

FIG 15 displays red cell and reticulocyte scatter-plot data obtained from the same sample as depicted in figures 14 A and 14 B. Here, when plotted against each other, the extinction (y-axis) and the right angle scatter (x-axis) show the separation of reticulocytes for the main population of mature red blood cells. The value of 1.72 % reticulocytes is in excellent agreement with the manual reference method of 1.60 %.

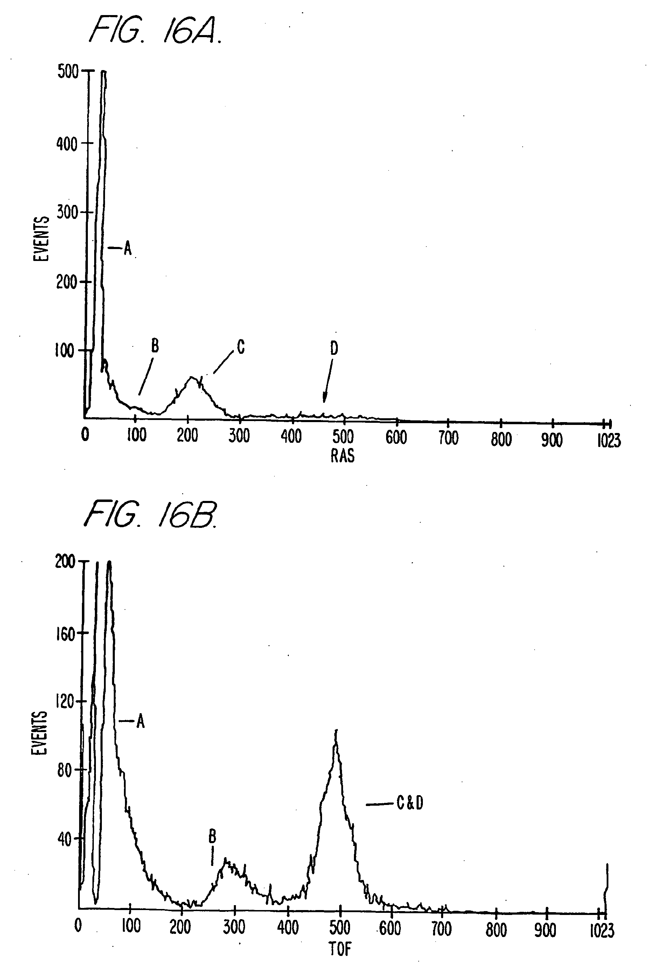

FIG 16 displays white cell differential histogram data obtained from right angle scatter, Figure 16 A, and for time of flight, or pulse width, figure 16 B, from the system.

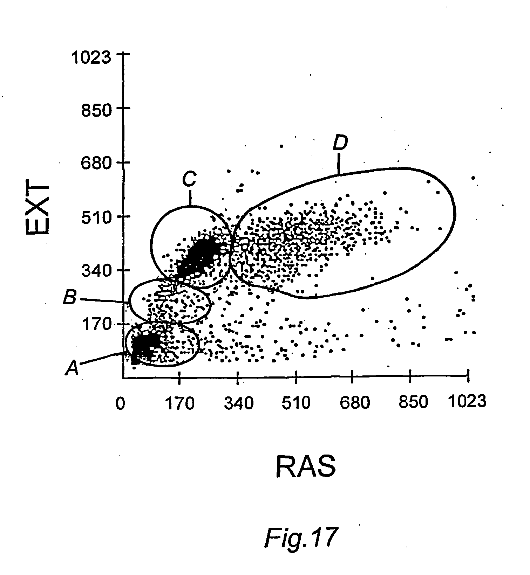

FIG 17 displays white cell differential scatter-plot data obtained from the same sample as depicted in figure 16 A and figure 16 B. Here, when plotted against each other, the extinction (y-axis) and the right angle scatter (x-axis) show the separation of several parts of the white cell differential. The area indicated by a represents lymphocytes, the area indicated by B represents monocytes, the area indicated by C represents neutrophil (a sub-set of granulocytes), and the area indicated by D represents eosinaphils (another sub-set of granulocytes). The eosinaphil cells present in D account for 20.63 % of the total, which is in excellent agreement with a reference method of 21.70 % eosinaphils.

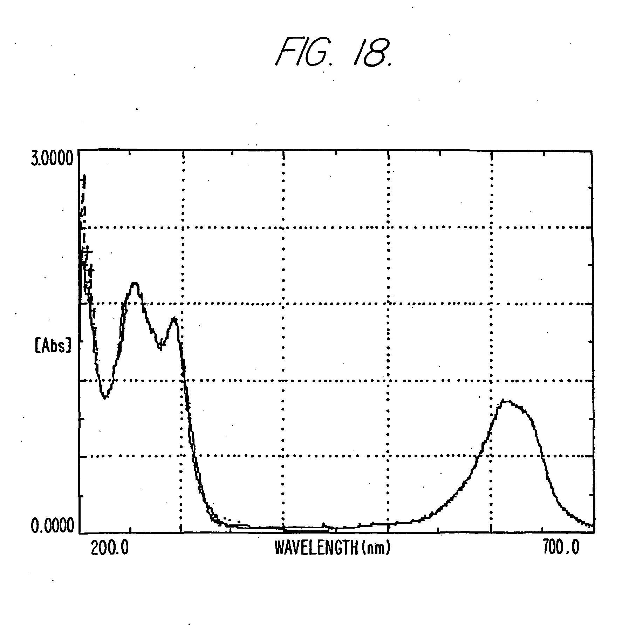

FIG 18 displays a spectrophotometer scan of the reticulocyte dye solution, which would be representative of 61, without the presence of blood.

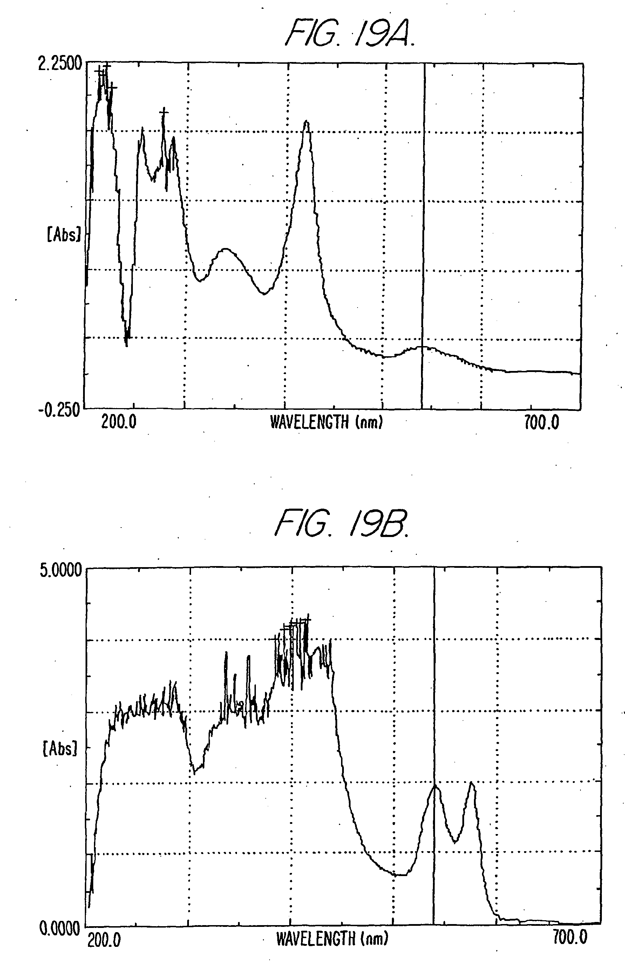

FIG 19 A displays a spectrophotometer scan of lyse a whole blood solution, which is read at 540 nm for a hemoglobin reference method (cyan-hemoglobin). Figure 19 B displays a spectrophotometer scan of lyse a whole blood solution, which when read at 540 nm for a hemoglobin, indicates the oxy-hemoglobin, and at 580 represents the deoxy-hemoglobin..

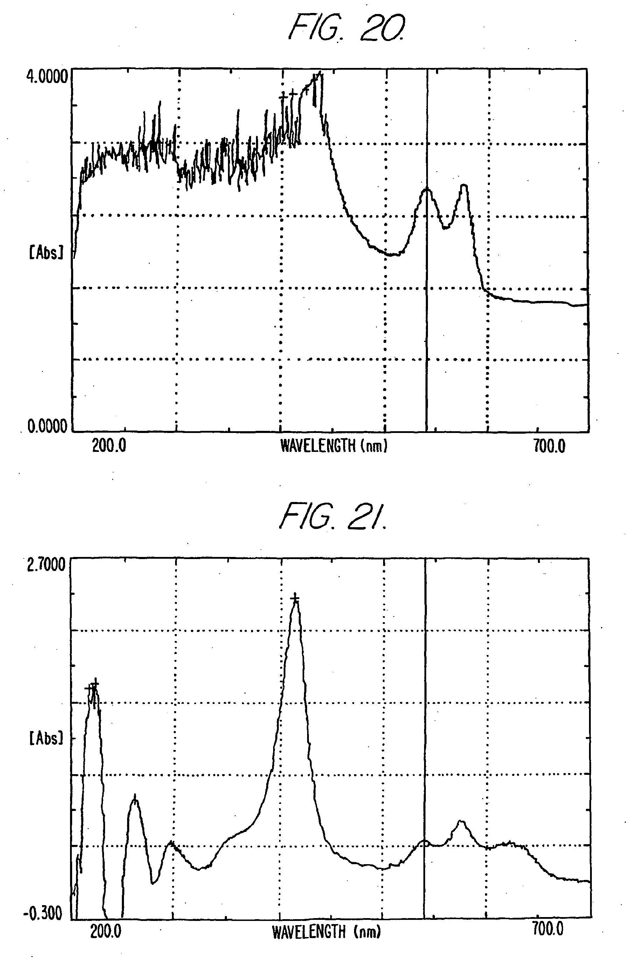

FIG 20 displays a spectrophotometer scan of diluted whole blood solution.

Figure 21 displays a spectrophotometer scan of a lyse whole blood and reticulocyte dye solution;

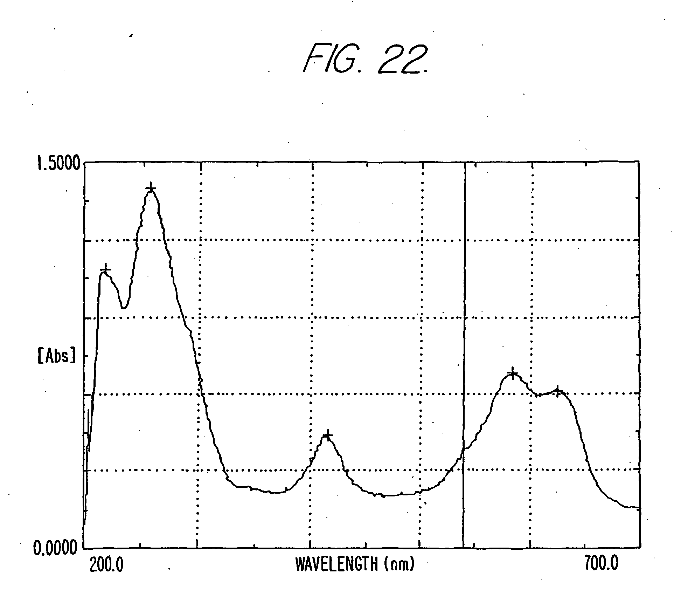

Figure 22 displays a spectrophotometer scan of a diluted whole blood and reticulocyte dye solution;

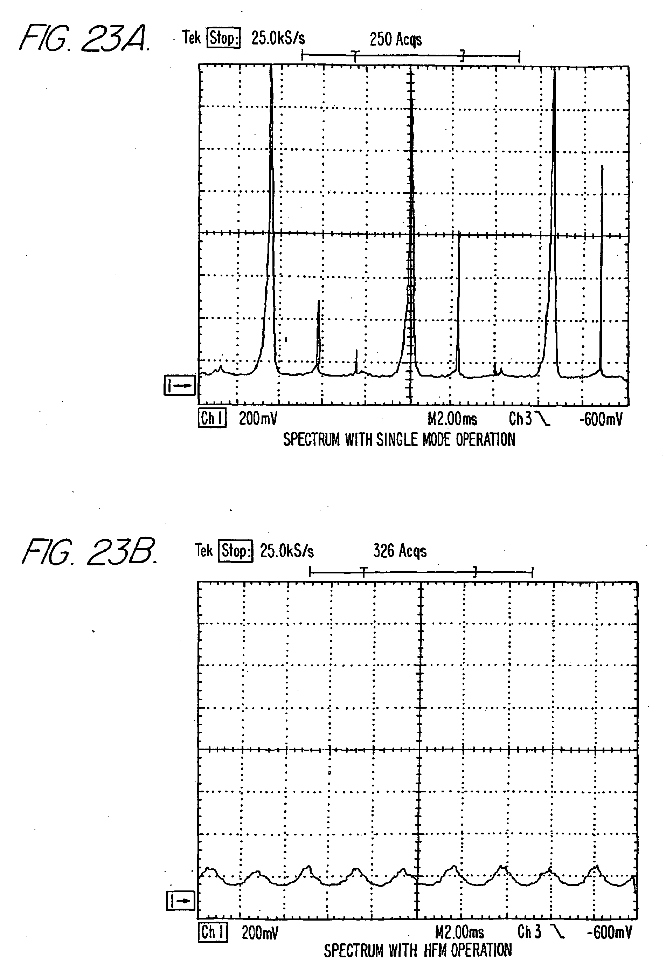

Figure 23 displays the spectrum analyzer output of a diode laser operating in single mode Figure 23A, and at the same laser operating with high frequency modulation, Figure 23B. The peaks in Figure 23A show high levels of noise at many different frequencies. While the baseline for this is excellent the high frequency noise peaks cause significant problems when trying to implement an extinction measurement and a lens-less scatter collection system. The net effect is false event counting and improper quantification of pulse height or area. The spectrum of the high frequency modulated laser in Figure 23B does not have as low of a baseline level, but has no high spikes. This helps enable accurate extinction quantification, and the implementation of a lens-less collection system for the other channels;

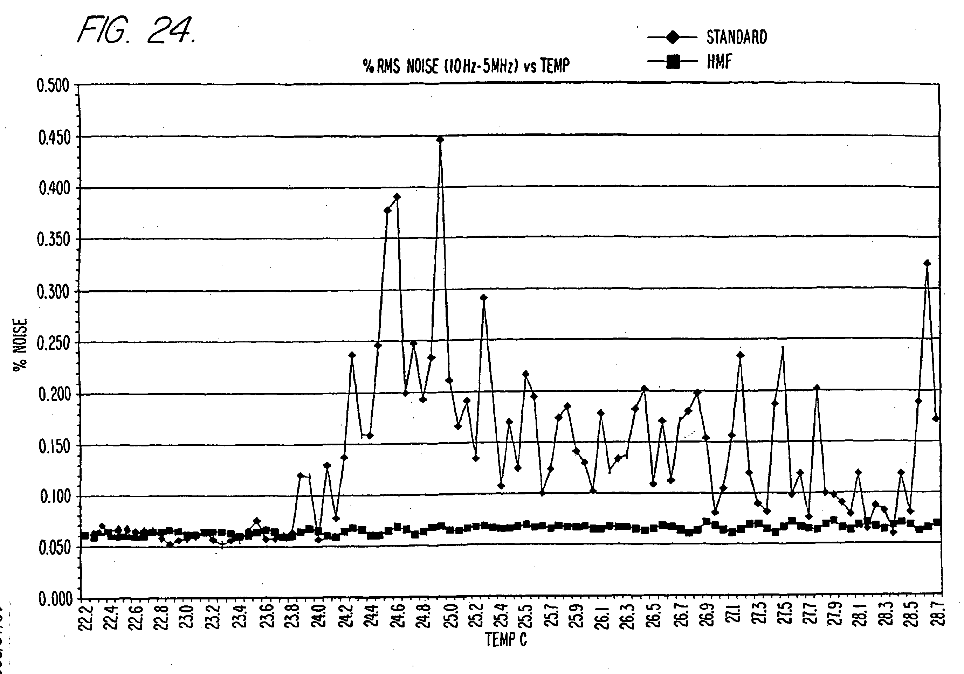

Figure 24 displays a plot of noise (root mean square) verse temperature for a constant power driven laser diode, or single mode, and the same device driven with high frequency modulation. This shows that a single mode laser that is driven at a constant power, can achieve noise levels at or below that of high frequency modulated lasers in some temperature ranges. Thus, high frequency modulation or a temperature-controlled laser is capable of enabling accurate extinction quantification, and the implementation of a lens-less collection system for the other channels. Because of the cost of controlling temperature, is much greater than the cost of oscillating (modulating) a laser, the preferred embodiment is high frequency modulation;

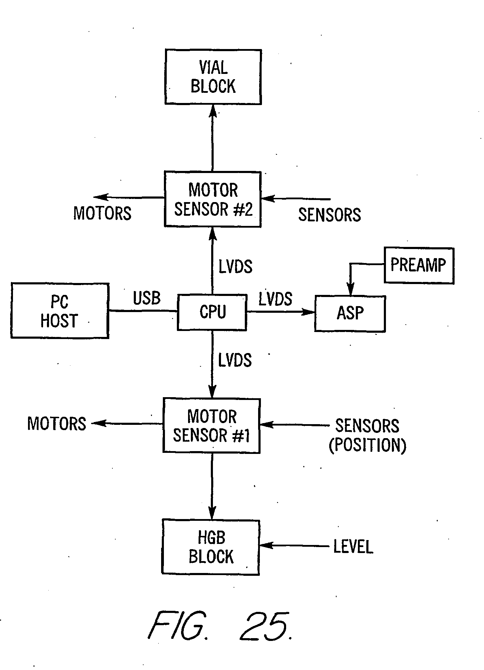

Figure 25 is a block diagram of the system electronics;

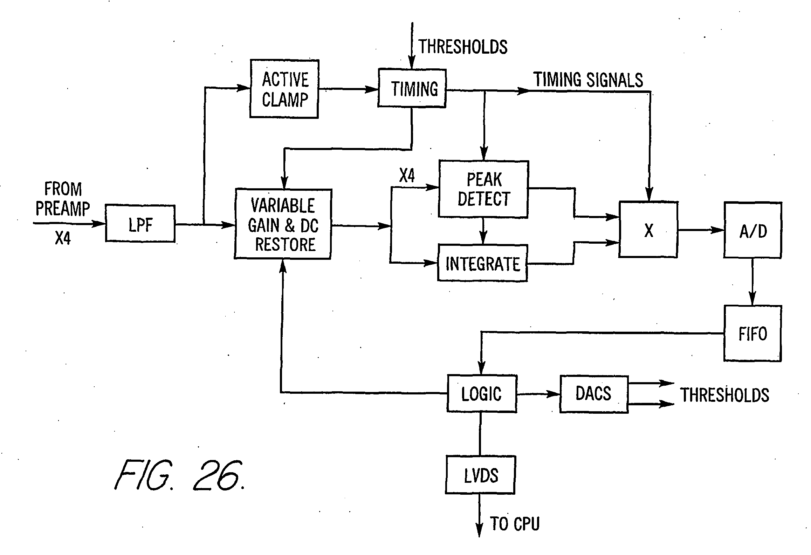

Figure 26 is a block diagram of the signal processing electronics.

Although reference is made to many components of a flow cytometry system, it is to be noted that the present invention is limited to a method as defined in the appended claims.

The method uses a flow cytometry-based hematology system. Such a system is capable of determining at least a complete blood count (CBC), a five-part white blood cell differential, and a reticulocyte count. The system has high level of reliability, and utilizes very low volumes of method reagents. The system is very inexpensive to construct, and further is usable without the need for significant levels of operator training. The system is particularly well suited for use in environments where there is a need for an instrument that can analyze large numbers of blood samples quickly and inexpensively and provide a complete blood analysis for each sample. Such environments would include, for example, medical clinics, doctor's offices, and veterinary offices.

The flow cytometry-based hematology system combines a unique lensless optical detection system with the use of consumable tubes of the invention that contain reference particles that are used for optical standardization and to check if the instrument is performing dilutions correctly. The system also employs a diode laser having a certain beam shape that is critical for the successful operation of the system. The use of a diode laser for bioparticle analysis in flow-cytometry-based systems has heretofore largely been avoided, due to the propensity of these systems to exhibit periodic noise phenomena. Although not forming part of the present invention; the present inventors have discovered that such problems can be overcome through the use of a high frequency modulation technique, discussed in greater detail below. The combination of these elements creates a system that is much lower in cost and higher in reliability that existing flow-cytometry-based hematology systems, and which can measure at least a complete blood count (CBC), a five-part differential white blood cell count, and a reticulocyte count, without the need for fluorescence or light absorption measurements. However, the system used in the present invention is not precluded from incorporating fluorescence or light absorption measurements to measure one or more desired parameters, as described herein.

## CONSUMABLE TUBE

The first item to be considered as part of the method of the present invention is the consumable tube. Each consumable tube has a unique coded label, as does every other tube placed in the instrument. Preferably, the coded label is a bar-coded label. The consumable tube contains one or more distinct types of particles that are used for count quantification checks, as well as for optical standardization. Each lot of reagents is aliquoted into consumable tubes, along with a defined number of reference particles. Such reference particles are know to those in the art and may be, for example, pollen grains, fixed cells or latex particles.

The key to selecting the proper particles for the system is that the particles must be distinguishable from the sample's target cells, on at least one of the axes of optical measurements. Latex particles have a different index of refraction than cellular components, and many sizes of latex particles are commercially available. In the case of 4.1-micron particles, these are distinguished from red blood cells and platelets on extinction (EXT), low angle forward light scatter (FSL), and right angle scatter (RAS) channels, but overlap with red blood cells on the high angle forward light scatter (FSH) and time-of-flight (TOF) channels. Functionally, it does not matter which axis has the best separation of the reference particle(s). As long as at least one of the five channels shows separation, the entire population of particles can be gated and analyzed completely separately from any of the sample cellular components.

Fixed red blood cells from a variety of different species are often employed as reference particles. These cells may be completely hidden on all channels during red blood cell analysis, and therefore may not be appropriate for use in detection and counting of red blood cells. However, they are still usable in the detection and counting of white blood cells, because since the fixation process makes them immune to lysing systems, they would be easily distinguished on all channels during white cell analysis. Fixed red blood cells from avian species offer the added feature of having a nucleus, which helps distinguish them from mammalian red cells exclusively by right angle scatter.

The internal reference particles are to be used at known concentration, and are to act as a cellular surrogate. This surrogate must have properties such that the instrument in at least one measurement technique can uniquely distinguish it from the cellular constituents of the sample. This cellular surrogate acts as an intra-sample, internal standard for quality control purposes. This assures that the instrument's measurements are performing properly, and that all dilutions have been made properly. The preferred embodiment of this surrogate is polystyrene particles. However, other particles, such as pollen, glass, fixed cells or large colloids could be used, so long as the above conditions are fulfilled. The particle size range is preferably from about 1 micron to about 10 microns, and have optical characteristics that uniquely separate them from platelets, white cells and red cells on at least one measurement axis of the instrument.

Polystyrene particles are commercially available through several manufacturers, such as Seradyn and Duke. The preferred size is 4.0 microns, which is easily distinguished from the cellular components of blood along several axes of data collection in the instrument. Choosing this size for the particles allow the particle's concentration to be easily determined. The reagent systems within the consumable are sensitive to a percent solids measurement (volume of particle time concentration of particles); thus, the lower the volume chosen, the higher the concentration of particles, and the broader the range that may be practiced. The preferred embodiment is to have the concentration of particles in the consumable at 10,000 per $\mu$l. At this level, the number of reference particle events counted will be within the same range as the number of white blood cells counted.

The concentration of the particles and their optical characteristics is determined by a reference method. Characteristics of the particles, such as counts per microliter for each particle type, mean signal for an optical measurement for each particle type, and coefficient of variation for an optical measurement for each particle type, are obtained. One of skill in the art would appreciate that other parameters associated with each particle type could also be measured and used advantageously in the system of the present invention, as desired, and the present invention is not intended to be limited in any way to the specific parameters listed above.

From this information, an encrypted bar code label is generated that references any one of or any combination of at least the following parameters:

1. Type of test
2. Lot Number
3. Expiration date
4. Serial number
5. Particle 1 concentration (expressed in terms of number of particles $\times 10^3 / \mu$l)
6. Particle 2 concentration (expressed in terms of number of particles $\times 10^3 / \mu$l)
7. Particle 1 EXT Mean
8. Particle 2 EXT Mean
9. Particle 1 FSL Mean
10. Particle 2 FSL Mean
11. Particle 1 FSH Mean
12. Particle 2 FSH Mean
13. Particle 1 RAS Mean
14. Particle 2 RAS Mean
15. Particle 1 TOF Mean
16. Particle 2 TOF Mean
17. Particle 1 EXT CV
18. Particle 2 EXT CV
19. Particle 1 FSL CV
20. Particle 2 FSL CV
21. Particle 1 FSH CV
22. Particle 2 FSH CV
23. Particle 1 RAS CV
24. Particle 2 RAS CV
25. Particle 1 TOF CV
26. Particle 2 TOF CV
27. Optical density of fluid at 488 nm
28. Optical density of fluid at 540 nm
29. Optical density of fluid at 580 nm

30. Optical density of fluid at 635 nm

For each particle type used on the system a table of reference values is generated, and stored on the PC linked to the instrument. The table of reference values may contain, as parameters, one or more of the following:

1. Particle Number
2. EXT Mean
3. FSL Mean
4. FSH Mean
5. RAS Mean
6. TOF Mean
7. EXT CV
8. FSL CV
9. FSH CV
10. RAS CV
11. TOF CV

As an example, assume 4.1-micron latex particles are designated particle 7. The following reference values associated with those reference particles may be stored on the PC:

1. Particle = 7
2. EXT Mean = 520
3. FSL Mean = 430
4. FSH Mean = 824
5. RAS Mean = 941
6. TOF Mean = 252
7. EXT CV = 3.1
8. FSL CV = 2.9
9. FSH CV = 4.2
10. RAS CV = 7.9
11. TOF CV = 2.1

Additionally, for each dye that is used on the system, there is an associated characteristic light absorption spectrum that is also stored in a table on the PC linked to the system. For each lot, the dye fluid will be tested for absorption at one or more wavelengths characteristic of these spectra, i.e., a wavelength at which absorption of the dye is at a maximal or minimal point, or which is uniquely identified with the dye. As an example, a reagent containing a dye may be tested for absorption at the following wavelengths:

1. Optical density of fluid at 488 nm
2. Optical density of fluid at 540 nm
3. Optical density of fluid at 580 nm
4. Optical density of fluid at 635 nm

Measurement at 635 nm is useful to detect blue dyes, which absorb light at this wavelength. Hemoglobin absorbs green light strongly, so a measurement at 540 nm is used to measure hemoglobin concentration. Measurements at 580 nm are useful to detect the products of some clinical chemistry assays, which absorb yellow light. Finally, a measurement at 488 nm is useful as a true calibration wavelength, since neither hemoglobin nor any of the commonly used reticulocyte dyes absorb at this wavelength and thus minimally interfere with this measurement.
As an example, assume new methylene blue is designated dye 3, and has the following absorption values in the reference table:

1. Optical density of fluid at 488 nm = 0.85
2. Optical density of fluid at 540 nm = 0.62
3. Optical density of fluid at 580 nm = 0.73
4. Optical density of fluid at 63 5 nm = 0.20

Now assume that the fourth lot of tubes for CBC tests, made in March of 2001 (4c01) which will expire in 2 years (2), contains two different sets of reference particles. The first set of reference particles references table entry 7, which refers to 4.1-micron particles at a concentration of 1,200 particles per microliter (0712). The second set of reference particles references table entry 25, which refers to a fixed cell particle at a concentration of 32,500 per microliter (25325), in a new methylene blue solution, which is table entry D (d). The consumable tubes containing the above-described solution are serialized from 0 - 50,000. Thus, the following bar codes would be created:

4c012071225325d00000 through 4c012071225325d50000

This reference bar code example is for demonstration. It would be obvious to one of skill in the art that the number of digits can be significantly reduced without loss of information.

Placing these bar codes on the consumable tubes will provide the system with the information necessary to perform quality control determinations on individual samples to show dilutions were done properly, and that all of the optical measurements were accurate.

As an example of the use of the bar-coded data in quality control determinations, assume that when a RBC dilution is made, the reagent volume of the consumable is diluted in half. Thus in the example above, the fixed cell count during this RBC count portion should be 16,250 (32,500/2). If the fixed cell count is not within a tolerance band around 16,250, the counted results will not be reported. Similarly, since the system is expecting 4.1-micron latex particles to be in the consumable tube, a count of 600 (1200/2) will confirm a correct dilution. However, if an incorrect dilution is detected, the system can compare the value obtained for the fixed cell particles with that obtained for the latex particles. If the relative deviation from the expected values are the same for each particle measurement, then a dilution error is suspected.

The system can also reference the expected optical values in the tables, which are independent of dilution. Comparisons of the data of the means and coefficient of variation (CV) of the particles, as they compare to the reference tables, allows a determination of whether a dilution error has occurred, and also gives insight as to optical alignment, laser power stability, and flow stream characteristics. As with the dilution example, if the recovered light scatter data does not match expected data within a preset tolerance, some or all of the cell classification analysis will not be reported. In this fashion, an accurate error message can be displayed to the operator that will assist in the proper remedial measures. Furthermore, the system can record its performance over time, and maintain a database of the system performance over time to record trends in the system. Based on the data obtained, and the recent trends, recommendations for service, recalibration, or troubleshooting techniques can be automatically generated.

## LASER AND LENSLESS OPTICAL DETECTION SYSTEM

To obtain reasonably accurate data out of any flow cytometry-based hematology system, individual cells or particles must pass individually through the sensing zone of a flow cell. To achieve this using standard impedance cell counters, whole blood is usually diluted on the order of 1:10,000, because of the large volume of the sensing zone of the aperture of the flow cell (i.e., 60 microns wide by 100 microns long). A flow cytometry-based hematology system, however, can run at higher concentrations of whole blood because the sensing zone on typical instruments is usually around 10 microns wide (core stream) by 20 microns long (laser beam height). Consequently, whole blood dilutions on the order of 1:500 to 1:1,000 may be used.

For the consumable tube described above, the ideal whole blood dilution is 1:100 for analysis of RBC's, which utilizes less than 20% of the volume of the consumable tube. This leaves 80%, or more of the tube volume to perform a WBC dilution, and a final rinse out of the system (waste chamber). To achieve this, the sensing zone must be further compressed from methods currently available. This can be accomplished in two ways. The first is to control the mass flow rate to very low, but consistent rates (0.05 microliters per second), to keep the core stream on the order of 7 microns wide. The second is to limit the laser beam height to around 3 microns.

This was accomplished through the use of a diode-laser line-emitting system, as described in pending U.S. Patent No. 6,612,719. The apparatus contains a semiconductor laser that produces light output that is oriented in first and second mutually perpendicular axes that are both perpendicular to the direction of light propagation. The apparatus also includes an optical system that is arranged in a manner so as to focus the output of the laser in the first and second axes at first and second focal parts that are spaced apart in the direction of the laser light propagation. At a plane intersecting each of the focal points, the light is formed into a line having a width in one axis and a length in the other axis.

Classical flow cytometers and flow cytometry-based hematology systems collect light that is scattered from cells at a variety of angles. These conventional systems utilize a collection lens which images the core stream, collects all the scattered light from a cellular component of a sample, and then passes it through an aperture that determines the angle of collection. This filtered light is then focused down to a photodetector, which collects the entire cone of scattered light at the desired angles. If more than one forward angle of light collection is desired, beam splitters and mirrors are used to separate distinct cones of light. For right angle scatter collection, conventionally a lens is used to image the flow stream, in order to keep background light levels low.

In the lensless design approach, detectors, without any accompanying lenses or other optical elements, are fixed in space to collect the appropriate signals induced by the cell passing through the laser beam. These signals include extinction (EXT) (0°- ~0.5°); low angle forward scatter (FSL) (~1°- ~3°); high angle forward scatter (FSH) (~ 4° - ~9°); and right angle scatter (RAS) (~ 50° - ~130°). In order to collect three different measurements at low angles from the path of the laser beam, the beam shaping optics form two foci of the diode laser light. See copending US Patent Application No. 6,612,719 The first focus is the plane in which the laser light intersects the cores stream of cells / particles. This focus is perpendicular to the plane of travel of the cells, and light scatters due to passage of the cells orthogonally through the thin center (focal plane) of a wide beam.

As a result of having a beam with a minimal height (i.e., a minimal dimension in the direction of particle flow through the flow cell), large numbers of cells, at high concentrations, can be analyzed without interference from coincidence events. This minimizes liquid volumes and the need to handle large volumes of liquids. Furthermore, this arrangement produces a high light power distribution on the cells at this first focus, so that right angle light scatter (RAS) can be measured using a much less expensive detector than that which is employed on conventional systems. In particular, a photodiode can replace the use of a photomultiplier tube. The horizontal power distribution allows for flow stream wander in that axis without appreciable drift, and further minimizes light scatter from the edges of the flow cell by maintaining the light power distribution parallel to the flow cell channel.

The second focus is at the plane where the detectors are placed. Here, the wide beam portion from the flow cell is reduced down to a minimum (i.e., is focused), and the light that has passed through the first focus has expanded, forming a long line of light having a certain height. Within this long line of light, a photodiode detector is placed at the point where the light level is greatest. This is the extinction (EXT) detector, which measures all of the axial light that is lost (the sum of absorbed light and scattered light) as the cell crosses the laser beam. This measurement hold a great deal of information, but this information can only be extracted when there is a high signal to noise (S/N) ratio. The gas lasers conventionally employed in flow cytometer-based hematology systems produce strong signals, but high levels of noise associated with these lasers have minimized their utility for EXT measurements. This can be offset by utilizing longer plasma tubes, as the longer the plasma tube the lower the noise level, and thus the greater the S/N ratio. Diode lasers have inherently lower noise levels than gas lasers, but exhibit periodic high levels of noise. These intermittent bursts of noise are referred to as "mode hopping". Subtle temperature or electrical current changes cause the laser diode to abruptly change from one single mode state to another single mode state. When mode hops are occurring, the S/N ratio of the extinction measurement is very low, making it useless for measuring small particles, or to distinguish subtle difference in larger ones.

To eliminate mode hops, careful temperature control and precise current control can be implemented. If this is done, each laser diode must be individually characterized to find a quiet temperature/current area where mode hops do not occur. Laborious effort must be incurred to characterize each individual laser diode for the ideal temperature and current settings. In addition, as the laser ages, the quiet temperature/current area changes, and resetting the temperature and current controls. Furthermore, even if the proper temperature is determined, when a diode laser is first turned on, it generates its own heat. Temperature equilibrium of the diode laser can take up to 30 minutes to establish. This equilibration time decreases the useful life of the laser. Lastly, the implementation of temperature control severely limits the operating temperatures which a unit can be used, and adds significant cost and size to a relatively cheap and small laser diode.

To obtain accurate extinction measurements using a photodiode laser, high frequency modulation can be employed. High-frequency modulation eliminates mode hops by having the laser exist in a multi-mode state. When temperature or current change, the primary mode of the diode changes, but since the diode laser is running in many modes to begin with, these changes do not produce any noise spikes. Furthermore, the frequency of modulation can be chosen to be much, much greater than the frequencies of interest for cell events, so the modulation is invisible to the system.

High frequency modulation solves the problems associated with use of temperature and current control in addressing mode hopping. A high frequency modulation system is stable within seconds, so there is no need to control for the temperature generated by the diode laser upon activation. Thus, the useful laser life is extended. Furthermore, unlike the temperature cooling systems, high frequency modulation systems are stable over a large range of operating temperatures. With high frequency modulation, there is no need to find the quiet temperature/current area, and no need to reset the equipment as the laser ages. Thus, the labor cost incurred in finding and maintaining a quiet temperature/current area for the diode laser is avoided.

High-frequency modulation is imposed on a diode laser in the following manner. A diode laser running in continuous wavelength (CW) mode has a built-in photodiode that is used for feedback, so that the power does not vary with temperature. This circuit changes the current input to the diode of the laser so that the light power is kept constant. In one embodiment, the CW set point of the laser driver is set so that it produces one-half of the rated power output of the laser. Next, a modulating circuit, which uses a crystal oscillator to produce an electric current with a sine wave output, is "summed" with the CW current. As a result, the laser power output takes on a sine wave shape, with a power maximum near the maximum rated power level of the laser at the peak of the sine wave and almost zero power at the minimum of the sine wave.

Since the laser beam converges to a focus at the detector plane, low angle light scatter (FSL) can be picked up at small linear distances from the axis of the converging beam without the need for lenses, as are required in conventional systems. FSL can be used to measure particle sizes. FSL is measured by placing an FSL photodetector as close to the EXT photodetector as is physically possible. This can be done with discrete photodiodes, or with a photodiode array that is appropriately size for the two independent measurements (EXT & FSL).

Information concerning index of refraction and internal complexity of particles is obtained by using higher angles of forward light scatter (FSH). This scatter measurement is generally made in the region of about 4° - 9°, measured from the axis of the laser. This measurement can be made without the use of lenses by either positioning a discrete photodiode to collect that area of light scatter, or by using a photodiode array with active components that correspond to the proper geometry. In one embodiment, a photodiode array is made that is effective to measure EXT, FSL, and FSH, all in the same array.

In the system of the present invention, the photodetector is preferably in the form of an photoarray on a single chip, with the detectors spaced and oriented to collect the scattered light at the appropriate angles. This configuration allows for three or more independent measurements to be made, without the requirement of any collection or imaging lenses. While the photodetector array has been described for the collection of EXT, FSL and FSH, such an array could be extended to angles of collection as high as ~40°. Above this value, the channel of the square flow would interfere with measurements.

To ensure alignment of all diodes to the proper angles, and to collect only pure angles of interest, a mask, which acts as a light filter, can be place over the discrete diodes or the photodiode array. This mask preferably has openings with curved shapes, to preserve the true angles of light scatter by covering the corners of any square or rectangular photodiodes that are used.. A precisely made mask of the proper geometry, which is affixed onto the photodiodes, reduces the requirement for optical alignment of the set of multiple diodes to only the alignment of the EXT detector diode, thus simplifying construction and calibration. This masked set of photodiodes is preferably positioned such that the extinction sensor has the maximum level of incident light, i.e., at the second focus of the laser light beam.

The position of the right angle scatter photodiode (RAS) is essential to preserve a high numerical aperture, which can only be achieved without the use of a lens. Therefore, the photodiode is affixed near the flow cell, parallel to the plane of the laser. All of the light that is scattered orthogonally by the cell or particle toward one side of the flow cell intersects the RAS photodiode. This gives orthogonal acceptance angles of ~50°-130°, or a numerical aperture of (NA) of 0.9.

This high numerical aperture RAS photodiode takes up an entire side face of the flow cell, so no other measurements can be made on this side of the flow cell. However, the face opposite the RAS detector is still available, and can be used to obtain other measurements. For example, this side of the flow cell may be used to generate standard fluorescent flow cytometer data, by employing detectors capable of detecting emitted fluorescent light. This side may also contain one or more of the following: a collection lens (low numerical aperture) that will image the flow stream in the center of the flow cell; beam splitters and interference filters, to separate several axes of fluorescent information; imaging lenses to focus the light to a detector; and photo multiplier tubes to detect low levels of fluorescent emissions.

The use of a lensless light detection system eliminates the need for associated optical elements, such as lenses, stops, and mirrors. The resulting light detection system is significantly smaller, lighter, less expensive, and more reliable than conventional light detection systems which rely on such optical elements to direct light beams within the instrument.

A disadvantage of using a lensless light collection system is that stray light easily gets into the detectors. Lenses are conventionally used to direct the light that images the core stream, so that only light that emanates from the core stream gets to a detector. Lenses are also use to focus light collected from full cone angles down to a point where a small photodetector is placed. The use of a relatively small photodetector minimizes dark current noise, which is proportional to the area of the photodiode. However, since a lensless system maintains a constant level of light of background light on all detectors in the system, a dark current noise baseline is not achievable. The constant background of light on the photodiodes generates a constant photo-current, in the signal processing electronics. This constant photo-current electronically is analogous to direct current, or DC, thus the lensless system generates a DC light level on each photodiode. Thus, it is more difficult with such a lensless system to eliminate the contribution of the DC light level, and impossible to achieve to the dark current noise minimum of the photodetector. It is however necessary such that the DC light does not interfere with the signals generated by the cells or particles. This is accomplished electronically with the use of a servo feedback circuit, so the desired signal portions (alternating current or AC component) can be measured accurately and reproducibly, regardless of temperature changes, laser power changes, or other environmental or electronic changes that can affect the DC light level.

In order to keep the outputs at a baseline value when no signal is present there is a local servo loop for each of the preamp circuits associated with the optical channels (EXT, FSL, FSH, RAS). Photodiode dark currents, input bias currents, or offset voltages can cause offsets or drift in the outputs of the preamp circuits. There are two methods of feedback used on the preamps. The first method consists of a P-Channel FET with its gate connected to the output of the second stage. Due to the larger dark current of the EXT sensor, a FET feedback voltage to current converter is used to maintain high impedance at the summing junction of the first stage op-amp. The feedback resistor produces a current proportional to the voltage at the output of the second stage. The second method of feedback uses an op-amp configured as an integrator to return a proportion of the signal back to the first stage op-amp to reduce the offset levels through the first and second stage op-amps. The local servo loops reduce low frequency signals. Equation (1) may be used to determine the corner frequency at which the servo loop will provide (-3dB) attenuation.

$$\text{Equation (1)} \quad f_{-3dB} = R_{diode} * G2/(2 \pi R_t R_f C_f)$$

where

$R_{diode}$ =    Feedback resistor across first stage op-amp
G2 =    Gain of second stage
$R_t$ =    Current to Voltage conversion resistor
$R_f$ =    Servo input resistor
$C_f$ =    Servo integrating capacitor

HGB MODULE

Hemoglobin concentration is a very common hematology parameter that is generally measured by light absorption at 540 nm. To accomplish this measurement, red blood cells are generally lysed in a solution containing 1 part whole blood to 250 part solution. This solution generally also contains a low level of a cyanide salt (i.e., KCN). The cyanide reduces all of the hemoglobin (oxy- and deoxy-) to hemoglobincyanide, which absorbs maximally at 540 nm. This absorption measurement is conventionally made in a 1.0 cm square cuvette (NCCLS), but other variants from the standard also work with high correlation to the reference method.

On conventional hematology instruments, the hemoglobin concentration is generally measured in an otherwise clear solution, and is always referenced to a clear fluid. Lysis of red cells allow the hemoglobin to be measured in the same fluidic channel as the white blood cells. Alternatively, on some systems, the hemoglobin content is measured in a separate channel.

In the instrument used within the present invention, hemoglobin (HGB) content is measured in an unconventional manner. The method of the present invention involves two separate measurements, which not only combine to give an accurate HGB value, but also verify the accuracy of the dilution that the system has made. The first HGB measurement occurs after one part whole blood is diluted 100-fold with a reticulocyte staining solution. This is referred to as the "red cell solution". This reticulocyte staining solution has a specific absorption spectra associated with it. The red cell solution is aspirated into a manifold block. This block contains at least three light emitting sources, configured to illuminate a cylindrical bore, where the red cell solution is held. Photodetectors are place in line with the light source and the cylindrical bore, with provisions for interference filters. This configuration allows for the measurement at least three different wavelengths of absorption. Three different wavelengths of absorption are used because of the presence of a dye in the reticulocyte staining solution.

The initial absorption measurements of the red cell solution do not provide as accurate a measurement of HGB concentration as other conventional techniques. However, the value of this measurement lies in its use as a data point for the determination of the accuracy of the whole blood dilution. As the instrument continues its cycle after making the initial "unlysed" hemoglobin measurement, total RBC and mean cell volume measurements are made in the cytometer portion of the instrument. This enables the calculation of the following:

- Hematocrit (HCT) = RBC * MCV / 10
- Mean Corpuscular Hemoglobin Concentration (MCHC) =100 * (HGB / HCT) '
- Mean Corpuscular Hemoglobin (MCH) = HGB / RBC

As the instrument cycle continues, more whole blood is added to the original solution, as well a lytic agent. The lytic agent destroys the red blood cell membranes (lysis), releasing HGB to be free in solution. This yields approximately 1 part whole blood to between 15 and 50 parts solution, which is referred to as the "white cell dilution". The white cell solution contains all of the dye from the previously measured red cell solution. The original concentration of the dye solution has now been diluted out by a factor between 1:1 and 1:4, with an optically clear fluid.

The white cell solution is aspirated into the manifold block where multiple absorption measurements are made, and a HGB value calculated. From this second HGB value, the HCT, MCHC and MCH can be recalculated. In addition to the HGB value, dye concentration can be measured, and compared to values obtained from the red cell solution. If, within a defined tolerance, the two independent HGB (HCT, MCHC, MCH) measurements match, and the dye ratios between the two solutions match, the instrument has, by measurement, verified all of its dilutions were performed accurately.

The white blood cell HGB calculations, due to the lysis of the RBCs, yields an accurate measurement of the HGB concentration. The red blood cell HGB calculations are not as accurate as the white blood cell HGB calculations, because the intact red cell membranes scatter light. However, a comparison of the differences in the absorbances that are due to the reticulocyte staining dye in each measurement permit a check of the accuracy of the dilutions. That is, the sample containing unlysed RBCs (the red cell solution) has a certain level of light absorption which is based on the concentration of the dye in the consumable tube. Later in the cycle, the sample containing lysed RBCs (the white cell solution) is measured for light absorption due to the dye. Because the hydraulic pathways for RBC and WBC analyses are common, the accuracy of the dilutions may be determined without the need for a separate reference solution. The acceptable range of ratios of the HGB measurements is known, either from being printed on a barcode label on the consumable tube or from a code on the consumable tube barcode label that references a value in a table of ratios stored in the PC. As a second check of the accuracy of the dilutions, the HGB measurements should also match within a certain tolerance. Otherwise, a dilution error should be suspected. The only case in which the dilution error would be undetected is the highly unlikely situation in which identical dilution errors are made on both samples.

In a preferred example of the above approach, the bar code on the consumable tube contains reference information on the expected values of dye absorption for undiluted samples (CAL). The instrument verifies this information for each lot number in use.

After the first dilution, the red cell solution should have a dye absorption value and an HGB concentration value that fall within a first set of expected ranges. These ranges should be the product of CAL $\times$ a first dilution factor (D1). After the second dilution, the white cell solution should have a dye absorption value and an HGB concentration that fall within a second set of expected ranges. These ranges should be the product of CAL $\times$ D1 $\times$ a second dilution factor (D2). So long as both sets of measurement are within the acceptable ranges, the results of the measurements are reported without the associated error messages.

REAGENTS

In determining the cellular composition of a blood sample, the instrument used within the present invention employs at least two primary method reagents and a third system reagent. These three reagents work together to first count and classify platelets and red cells, and then, after further reagent manipulation, count and classify white blood cells. The counting and classification take place in two discrete phases, and in each of the two discrete phases the blood-reagent mixtures are passed through a flow cytometer and cells in the samples are identified and counted.

One method reagent, designated the RBC / Retic method reagent, is placed in a standard, capped, test tube, referred to as the "consumable". The consumable contains the following:

- New methylene blue, in a concentration range from 0.1 to 0.5 grams per liter. This component serves to stain the residual RNA in reticulocytes a blue color. The preferred concentration is 0.3 grams per liter.
- Purafac-A-39-Pric, in a concentration range from 0.1 to 0.6 grams per liter. This component acts to modify the normal biconcave shape of red blood cells, by interacting with the cell membrane and the internal hemoglobin, to form spherical cells. The preferred concentration is 0.3 grams per liter.
- Internal reference particles that have a know concentration, which is nominally at $10^4$ particles per $\mu$l, but can be used in a range of $10^3$ to $10^5$ per $\mu$l.
- Buffers and preservatives. The buffers and preservatives consist of sodium bicarbonate (preferably 8.0 grams per liter, but can range from 6.0 to 10.0 grams per liter); sodium cloride (preferably at 3.1 grams per liter); Tricine (preferably at 1.8 grams per liter, but ranging from 1.0 to 5.0 grams per liter); di-sodium EDTA (preferably at 1.0 grams per liter, but ranging from 0.5 to 3.0 grams per liter); ethyl paraben (0.3 grams per liter), and methyl paraben (0.2 grams per liter). The pH of this solution should be in a slightly basic range between 7.2 to 8.9, with an osmolarity of between 275 and 294 milliosmoles, and a conductivity of between 11.0 and 13.0.

The internal reference particles are to be used at known concentration, and are to act as a cellular surrogate. This surrogate must have properties such that the instrument in at least one measurement technique can uniquely distinguish it from the cellular constituents of the sample. This cellular surrogate acts as an intra-sample, internal standard for quality control purposes. This assures that the instrument's measurements are performing properly, and that all dilutions have been made properly. The preferred embodiment of this surrogate is polystyrene particles. However, other particles, such as fixed cells, pollen, glass, or large colloids could be used, so long as the above conditions are fulfilled.

The particle size range is preferably from about 1 micron to about 10 microns, and have optical characteristics that uniquely separate them from platelets, white cells and red cells on at least one measurement axis of the instrument.

Polystyrene particles are commercially available through several manufacturers, such as Seradyn and Duke. The preferred size is 4.0 microns, which is easily distinguished from the cellular components of blood along several axes of data collection in the instrument. Choosing this size for the particles allow the particle's concentration to be easily determined. The reagent systems within the consumable are sensitive to a percent solids measurement (volume of particle time concentration of particles); thus, the lower the volume chosen, the higher the concentration of particles, and the broader that range of particles concentrations that may be practiced. The preferred embodiment is to have the concentration of particles in the consumable at 10,000 per $\mu$l. At this level, the number of polystyrene events counted will be within the same range as the number of white blood cells counted.

The second method reagent is designated the "lyse". The lyse acts to destroy red blood cells while leaving the white blood cells intact. In this fashion, the white blood cells can be analyzed, without interference from the vast numbers of red blood cells. This reagent may be packaged in a standard, capped, test tube, preferably in a form that allows it to be used with up to fifty separate consumable tests.

The lyse preferably contains:

- Saponin, which can be used at concentrations between 6.0 and 20.0 grams per liter. The preferred concentration is 18 grams per liter.
- Buffers and preservatives, which consist of sodium sulfate (preferably at 12.0 grams per liter, but effective in a range of 10.0 - 16.0 grams per liter); disodium EDTA (preferably at 1.0 grams per liter, but effective from 0.5 to 3.0 grams per liter); pro-clin 300 (preferably at a concentration of 0.5 ml per liter); and germabox II (preferably at 1.0 ml per liter). This pH of this reagent should be in a range between 4.2 and 5.2, with an osmolarity of between 235 and 285 milliosmoles, and a conductivity of between 14 and 16.

The system reagent primarily acts as a whole blood diluent, as a sheath solution and as a wash reagent. The system reagent is also referred to as "sheath solution". The sheath solution performs several functions, such as whole blood dilution reagent, sheath reagent for flow cytometric analysis, washing reagent for the instrument's hydraulic path, and lytic aide for the lyse reagent to clear red blood cells. The sheath is preferably packaged in a container that will hold enough to run fifty separate consumable tests.

The sheath contains the following:

- Phosphate-buffered saline solution (preferably having an osmolarity of 25 milliosmoles, but can be used in a range from 5 to 50 milliosmoles).
- Surfactant to aid in both cleaning of internal system components, and to keep internal wetted surfaces from having air bubbles adhere to them. The preferred surfactant is Plurafac-A-39, which can be used in a range of 0.1 grams per liter to 0.3 grams per liter, and preferably at a concentration of about 0.1 grams per liter. Besides Plurafac, other non-ionic surfactants such as could be used.
- Preservatives

To automatically create the dilutions of whole blood with the method reagents described, a hydraulic system and various mechanisms is used. The user presents to the instrument a barcode-labeled consumable tube, as well a properly anti-coagulated whole blood sample. The instrument reads the necessary information from the barcode, then automatically aliquots a small amount of whole blood into the consumable, along with a volume of sheath solution. This ideally creates a total dilution of one part blood to 100 parts solution (RBC / retic reagent and sheath), but the dilution can range from 1:50 to 1:5,000.

A known volume of this solution is then pulled into the instrument from the consumable tube and moved to a position near the entrance to the optical flow cell. The solution is then passed, at a slow mass flow rate of less then 0.25 microliters per second by hydrodynamic focusing, through an optical detection system, where light scatter and light absorption for individual red blood cells, platelets and microparticles, as well as light absorption by a dye in the solution, are measured.

After red cell/platelet analysis is complete, the instrument aliquots a second, larger amount of whole blood into the consumable tube, along with an aliquot of lyse and appropriate amounts of sheath solution, to form a dilution of preferably one part blood to twenty parts solution. This dilution can range from 1:10 to 1:100. The intent is to provide a solution that can lyse the red blood cells, but keep intact the white cells of the whole blood sample for a period of at least one minute.

A known volume of this second solution is then pulled into the instrument from the consumable tube and moved to a position near the entrance to the optical flow cell. The solution is then passed, at a moderate mass flow rate of up to about one microliter a second using hydrodynamic focusing, through an optical detection system, where light scatter and light absorption for individual white blood cells, microparticles, and dye are measured.

The following description describes the system used within the present invention in relation to the accompanying figures. It will be understood by those of skill in the art that certain modifications may be made in the invention as described below without departing from the scope of the attached claims.

The user opens a door of the system, when it is in the READY state, which exposes two open tube slots (figure 7 slot A and figure 7 slot B). In these empty slots, the user places a consumable tube (60), and a whole blood sample, which contains an anticoagulant (i.e. EDTA, Citrate, and Heparin). The user then closes the door. The system verifies the presence and identity of the two added tubes, and moves the vial holding carriage (70) so that the consumable is positioned under the mixer (80). Motor 82 position the mixer so that it is in contact with the top of the consumable tube (60). Spinning it in one direction, and then reversing the direction mix the tube. During the spinning process, the bar code label is read which contains lot calibration information. After adequately mixing the consumable tube to homogenize the particles, the carriage 70 positions the whole blood sample under the mixer, and in a similar manner mixes the whole blood tube so as to ensure sample homogeneity.

The carriage then potions the whole blood tube underneath the hydraulic needle 11 and pneumatic needle 12. By moving motor 81, the needles then pierce the whole blood tube's septum, and continue to penetrate the tube until the both needles come in contact with the surface of the blood. This ensures that the orifice of hydraulic needle 11 is completely immersed, but the orifice of pneumatic vent needle 12 is not.

Opening valve 3, and moving syringe 6 pulls blood pulled into the tip of needle 11. Ideally, 5 microliters of whole blood will be aspirated for this portion. Valve 3 is then closed. The needles are then retracted from the whole blood patient sample. As the needles withdraw through the septum, the needles are wiped almost completely clean by the septum. The carriage 70 now positions the consumable tube 60 under the needles. As before, by moving motor 81, the needles 11 land 12 pierce the septum of consumable tube 60, and penetrate the tube until the both needles come in contact with the surface of the reagent.

Valves 5 and 3 are then opened, while syringe 7, which is filled with the system diluent begins to dispense. This pushes the blood from the tip of the needle 11 and a volume of sheath fluid into the consumable, which is now represented by 61. While dispensing, motor 81 has moved the needles 11 and 12 up so as to prevent the orifice of needle 12 from coming into contact with solution. This solution is now fairly homogeneous, but to ensure homogeneity, valves 3 and 5 are closed, and the needles are withdrawn from 61, which is then moved to the mix position under 80, and mixed by spinning, as described above. During this process valve 3 and valve 5 open, and syringe 7 creates an air gap at the tip of the needle.

Consumable tube 61 is next placed under needles 11 and needle 12. By moving motor 81, the needles 11 and 12 pierce the septum of the consumable, and penetrate the tube until the both needles come in contact with the surface of the solution. Syringe 7 then aspirates a know volume of solution into the tip of the needle. The needles 11 and 12 are then withdrawn from the solution, but are not removed from consumable tube 61, by motor 81. This creates a slug of the diluted whole blood in needle 11. Syringe 7 the pulls this slug through the HGB module 10, where it is evaluated for absorption at four separate wavelength of light. Such spectral data is represented in figure 22. The volume of the slug can also be evaluated here by evaluating the absorption values of the detector channels, which change as the air gaps on each side of the slug pass through.

Syringe 7 continues to pull the slug past valve 3, and positions it close to valve 5. Valve 3 closes while valve 2 opens, at which point syringe 7 reverses it's direction and pushes the slug through valve 2, to the tip of the flow cell assembly 20.

Valve 2 then closes, and valve 4 opens, which allows syringes 6 and 7 to be filled form the system diluent reservoir 8. Valve 5 then closes, valve 1 opens, and syringes 6 and 7 dispense very slowly. The sheath solution of syringe 7 is dispensed through 21, and the slug of diluted whole blood is pushed by syringe 6 through 20. This forms a sheath confined core stream of diluted whole blood in 25, which transport the stream to the funnel of flow cell 22, where the cells are interrogated by the light sources of emitting from optical assembly 41. This stream of fluid passes completely through flow cell 22, and into the tubing of 23, which is affixed to the flow cell 22 by flow cell cap 24. This leads path leads to the system waste 9.

While the fluid stream is passing though flow cell 22, optical assembly 41 illuminates the cells of the diluted whole blood individually. The cells pass through an optical focal point 34 of the laser 30, which maximize the incident power upon the cells. This narrow focus is generated by lens 33. Light effected by the cell passages through focal point 34, changes the quantities of light that is incident upon photodiodes 42, 43, 44 and 45. These changes are captured by the signal processing electronics of figure 26, and stored via the system electronics of figure 25. Examples of data collected in this manor are shown FIG 10 A - 10 D.

Fig 10 A, shows data which has been collected for the forward scatter low (FSL) signal, from detector 45. 10 B shows data, which has been collected for the extinction or axial light loss (EXT) signal, from detector 44. Fig 10 C shows data, which has been collected for the right angle scatter (RAS) signal, or detector 42. Fig 10 D shows pulse width data which has been collected from the forward scatter low (FSL) signal, or detector 45, but measure the time of flight, or the time the cell is in front of the laser beam. For figures 10 A, 10 B, 10 C and 10 D, the peak's shown by A represent platelet events, the peak's shown by B represents latex particle events, and the peak's shown by C represents red blood cell events. This same data is shown in a scatter plot form in figures 11 A and 11 B. For figure 11 A, the dots in box A represent the latex particle events, and in 11 B, circle B represent latex particle events. Scatter plot data could be represented by any pair of the up to four detectors, and time of flight.

Should the reagents used in creating this dilution use an RNA staining dye, such as new methylene blue, the data can be further analyzed by looking only at the red blood portions, C, in Figures 10 A -10 D to evaluate reticulocytes. Histogram of such analysis are shown in figures 14 A and 14 B, and a scatter plot is shown in Figure 15. Figure 15 shows a calculated 1.72-% population, which are reticulocytes. This compares favorably with a manual reference method of 1.60-% reticulocyte count.

After successfully counting and classifying the red blood cell, reticulocytes, platelets and latex, the needles 11 and 12 are withdrawn from the consumable 61. Carriage 70 moves the whole blood sample so it is positioned under the needles 11 and 12. Moving motor 81, the needles pierce the whole blood tube's septum, and continue to penetrate the tube until the both needles 11 and 12 come in contact with the surface of the blood. This ensures that the orifice of hydraulic needle11 is completely immersed, but the orifice of pneumatic vent needle12 is not. Opening valve 3, and moving syringe 6, causes blood is pulled into the tip of needle 11. Ideally, 100 microliters will be aspirated for this portion. Valve 3 is then closed. Needles 11 and 12 are then retracted from the whole blood patient sample. As the needles 11 and 12 withdraw through the septum, the needles are wiped almost completely clean by the septum. The carriage 70 now positions the consumable tube 61 under the needles 11 and 12. By moving motor 81, needles 11 and 12 pierce the septum of consumable 61, and penetrate the tube until the both needles 11 and 12 come in contact with the surface of the solution.

Valve 5 and valve 3 are opened, while syringe 7, which is filled with the system diluent begins to dispense. This pushes the 100 microliters of blood through the tip of the needle 11. A volume of sheath fluid follows the whole blood into the consumable, which is now represented by 62. While dispensing motor 81 has moved the needles up, so as to prevent the orifice of needle 12 from coming into contact with solution. Needles 11 and 12 are now extracted from consumable tube 62, and carriage 70 moves the positions of figure 7 slot C, which contains a tube of lysing reagent, under needles 11 and 12. Moving motor 81, the needles 11 and 12 pierce the lyse tube's septum, and continue to penetrate the tube until the both needles 11 and 12 come in contact with the surface of the lyse. Opening valve 3, and moving syringe 6, pulls lyse into the tip of needle 11. Ideally, 100 microliters of lyse will be aspirated for this portion, which is then followed by an air gap. Removing the needle 11 from the solution, then moving syringe 6 creates this air gap. Valve 3 is then closed. Needles 11 and 12 are then retracted from the lyse tube. As the needles withdraw through the septum, the needles are wiped almost completely clean by the septum. Carriage 70 positions the consumable 62 under the needles 11 and 12. Valve 5 and 3 are then open, while syringe 7, which is filled with the system diluent begins to dispense. This pushes the 100 microliters of lyse through the tip of the needle 11. A volume of sheath fluid follows this into the consumable, which is now represented by 63. While dispensing, motor 81 has moved the needles up, so as to prevent the orifice of needle 12 from coming into contact with the solution.

The solution in consumable tube 63 fairly homogeneous, but to ensure homogeneity, valves 3 and 5 are closed, and the needles are withdrawn from 63, which is then moved to the mix position under 80, and mixed by spinning, as describe above. During these process valves 3 and 5 open, and syringe 7 creates an air gap at the tip of the needle.

Consumable 63, is place under the needles 11 and 12. Moving motor 81, needles 11 and 12 pierce the septum of the consumable 63, and penetrate the tube until the both needles 11 and 12 come in contact with the surface of the solution. Syringe 7 then aspirates a know volume of solution into the tip of the needle 11. Needles 11 and 12 are then withdrawn from the solution, but not completely from consumable tube 61, by motor 81. This creates a slug of the lysed whole blood in needle 11. Syringe 7 pulls this slug of lysed whole blood through HGB module 10, where it is evaluated for absorption at four separate wavelength of light. Red blood cells have been lysed in this case, freeing hemoglobin from the cells. Absorption data can be shown by figure 19 A if cyanide was used in the lysing agent, figure 19 B if only a lytic agent was used, and by figure 21, if the cell lysis occurred in the presense of a reticulocyte stain. The volume of the slug can also be evaluated here by evaluating the absorption values of the detector channels, which change as the air gaps on each side of the slug pass through.

Syringe 7 continues to pull the slug past valve 3, and close to valve 5. Valve 3 closes, and valve 2 opens, at which point syringe 7 reverses it's direction and pushes the slug through valve 2, to the tip of the flow cell assembly 20.

Valve 2 then closes, and valve 4 opens, which allows syringes 6 and 7 to be filled form the system diluent reservoir 8. Valve 5 then closes, valve 1 opens, and syringes 6 and 7 dispense very slowly. The sheath solution of syringe 7 is dispensed through 21, and the slug of lysed whole blood is pushed by syringe 6 through 20. This forms a sheath confined core stream of lysed whole blood in 25, which transport the stream to the funnel of flow cell 22, where the cells are interrogated by the light sources of emitting from optical assembly 41. This stream of fluid passes completely through flow cell 22, and into the tubing of 23, which is affixed to the flow cell 22 by flow cell cap 24. This leads path leads to the system waste 9.

While the fluid stream is passing though flow cell 22, optical assembly 41 illuminates the cells of the diluted whole blood individually. The cells pass through an optical focal point 34 of the laser 30, which maximize the incident power upon the cells. This narrow focus is generated by lens 33. Light effected by the cell passages through focal point 34, changes the quantities of light that is incident upon photodiodes 42, 43, 44 and 45. These changes are captured by the signal processing electronics of figure 26, and stored via the system electronics of figure 25. Examples of data collected in this manor are shown in figures 12 A - 12 F.

Fig 12 A, shows data which has been collected for the extinction or axial light loss (EXT) signal, from detector 44, without latex present, 12 B shows the same sample with latex present. 12 C shows data, which has been collected for the forward scatter low signal, from detector 45 without latex present and 12 D shows the same sample with latex present. Fig 12 E shows data which has been collected for the right angle scatter (RAS) signal, or detector 42 without latex present and figure 12 F shows the same sample with latex present.

For figures 12 A, 12 B, 12 C, 12 D, 12 E and 12 F, the peak shown for A represent lymphocyte events, the peak shown for B represents monocyte events, and the peak shown for C represents granulocyte events, and the peak shown for D represent latex events. This same data is shown in a scatter plot form in figures 13 A and 13 B. For figure 11 A, the dots in circle D represent the latex particle events, and in 11 B, circle D also represent the latex particle events. Scatter plot data could be represented by any pair of the up to four detectors, and time of flight.

For samples which contain eosinophils in there granulocytes population, separation of the sub-population is achieved in the right angle scatter channel of detector 42. Figure 16 A shows the histogram of data where A represents lymphocytes, B monocytes, C neutrophils, and D eosinophils. Figure 17 shows the same data as Figure 16, but in scatter plot form. The encircle populations of A represents lymphocytes, B monocytes, C neutrophils, and D eosinophils. Any pair of up to four detectors and time of flight could represent by scatter plot data, but to distinguish eosinophils, right angle scatter is necessary.

After the white blood cells have been counted and classified, syringe 7 is charged with fluid from reagent reservoir 8, by the opening of valve 4. Valve 4 closes, 3 and 5 open, which allows syringe 7 to clean the samples lines by back-flushing fluid into the consumable tube 63 through needle 11. Needle 12 acts to vent the tube through filter 13, to atmosphere. This yields a consumable tube that is of the configuration shown in 64. Carriage 70 now moves to it's home position, where the user can open the system door, and remove the tubes from figure 7 slots A and B. The consumable is now a waste tube, and is discarded.

Other modes of operation, along the same lines as described above would allow for immunoassay to be performed by latex agglutination techniques. Here the consumable would contain latex that is coated with an antibody, such that the particles they would clump together in the presence of the proper analyte. This latex mixture would be run through the optical channel described in Figure 4, and the data would be evaluated for doublets or triplet particle clumps. The higher the concentration of these clumps the higher the concentration of the analyte of interest.

The present invention is not intended to be limited in scope by the specific embodiments described herein, but is limited by the scope of the present claims.

## Claims

1. A method of analyzing a blood sample or a blood-derived sample using a flow cytometry-based haematology system comprising an optical detection system, the method comprising:

   providing a consumable closed tube (60) having at one end thereof a septum which is pierceable by a needle, said tube containing:

   a known number of reference particles, each of said reference particles having a predetermined diameter and being distinguishable from target cells of the blood sample or the blood-derived sample based on at least one optical measurement of an extinction measurement, a low angle forward light scatter measurement, right angle scatter measurement, a high angle forward light scatter measurement and a time-of-flight measurement; and
   at least one reagent for enabling determination of the cellular composition of the blood sample or blood-derived sample, the at least one reagent comprising at least one dye;

   piercing the septum with a needle (11) and aliquoting a first portion of whole blood and a known volume of sheath solution into the consumable closed tube (60) via the needle (11), the first portion of whole blood, the known volume of sheath solution, the reference particles and the at least one reagent forming a first solution;
   pulling a known volume of the first solution from the consumable closed tube (60) into the optical detection system via the needle (11);

using the optical detection system to measure light scatter and light absorption for individual red blood cells, platelets and the reference particles within the known volume of the first solution and to measure light absorption for the at least one dye within the known volume of the first solution;

aliquoting a second portion of blood and a volume of sheath solution into the consumable closed tube (60) via the needle (11);

aliquoting an aliquot of lyse into the consumable tube (60), via the needle (11), the contents of the consumable closed tube (60) and the lyse forming a second solution;

pulling a known volume of the second solution into the optical detection system via the needle (11);

using the optical detection system to measure the light scatter and light absorption for individual white blood cells, the reference particles and the at least one dye within the known volume of the second solution.

2. The method according to claim 1, wherein said diameter of each of said reference particles is between 1 micron and 10 microns.

3. The method according to any of the preceding claims wherein, when the blood sample or blood-derived sample is in said consumable closed tube (60), said known number of reference particles is between about $10^3$ and about $10^5$ per $\mu l$ of a solution comprised of said reagent and said blood sample or blood-derived sample.

4. The method according to any of the preceding claims, wherein said reference particles are selected from the group consisting of latex particles, fixed cells, pollen, glass, and large colloids.

5. The method according to any of the preceding claims, wherein said reagent is effective to enable said flow cytometry-based hematology system to count at least one of red blood cells and reticulocytes in a blood sample or blood-derived sample.

6. The method according to any of the preceding claims, wherein said reagent includes a reactant capable of staining ribonucleic acid [RNA] in reticulocytes.

7. The method according to claim 6, wherein said reactant capable of staining ribonucleic acid [RNA] in reticulocytes is new methylene blue.

8. The method according to claim 7, wherein, when the blood sample or bloodderived sample is in said consumable closed tube (60), said new methylene blue is present at a concentration between about 0.1 to about 0.5 grams per litre of a solution comprised of said reagent and said blood sample or blood-derived sample.

9. The method according to any of the preceding claims, wherein said reagent includes a reactant capable of modifying the shape of red blood cells but otherwise leaving said red blood cells substantially intact.

10. The method according to claim 9, wherein said reactant capable of modifying the shape of red blood cells but otherwise leaving said red blood cells substantially intact is Plurafac-A-39-Pric.

11. The method according to claim 10, wherein, when the blood sample or blood-derived sample is in said consumable closed tube (60), said Plurafac-A-39-Pric is present at a concentration between 0.1 and 0.6 grams per litre of a solution comprised of said reagent and said blood sample or blood-derived sample.

12. The method according to any of the preceding claims, wherein said reagent includes new methylene blue and said Plurafac-A-39-Pric.

13. The method according to claim 12, wherein, when the blood sample or blood-derived sample is in said consumable closed tube (60), said new methylene blue is present at a concentration between 0.1 to 0.5 grams per litre of a solution comprised of said reagent and said blood sample or blood-derived sample, and said Plurafac-A-39-Pric is present at a concentration between 0.1 to 0.6 grams per litre of a solution comprised of said reagent and said blood sample or blood-derived sample.

14. The method according to any of the preceding claims, wherein said reagent includes:

   a) new methylene blue, at a concentration between about 0.1 and about 0.5 grams per litre;
   b) Plurafac-A-39-Pric, at a concentration between about 0.1 and about 0.6 grams per litre;

c) sodium bicarbonate, at a concentration between about 6.0 and about 10.0 grams per litre;
d) sodium chloride, at a concentration between about 1.0 and about 5.0 grams per litre;
e) Tricine, at a concentration between about 1.0 and about 5.0 grams per litre;
f) disodium EDTA, at a concentration between about 0.5 and about 3.0 grams per litre;
g) ethyl paraben at a concentration between about 0.1 and about 0.5 gramps per litre; and
h) methyl paraben at a concentration between about 0.1 and about 0.3 grams per litre,

wherein each of said concentrations is the concentration per litre of a solution comprised of said blood sample or blood-derived sample and said reagent, when said blood sample or blood-derived sample is in said consumable closed tube (60).

15. The method according to any of the preceding claims, wherein said reagent is effective to enable measurement of at least one of a white blood cell count, a five-part white blood cell differential, and hemoglobin levels.

16. The method according to any of the preceding claims, wherein said reagent includes saponin, at a concentration between 6.0 and 20.0 grams per litre of the solution comprised of said reagent and said blood sample or blood-derived sample, when said blood sample or blood-derived sample is in said consumable closed tube (60).

17. The method according to any of the preceding claims, further comprising:

a) sodium sulfate, at a concentration between 10.0 and 16.0 grams per litre;
b) disodium EDTA, at a concentration between 0.5 and 3.0 grams per litre;
c) a preservative ProClin 300, at a concentration between 0.1 and 1.0 grams per litre; and
d) a preservative germabox II, at a concentration between 0.5 and 3.0 ml per litre,

wherein each of said concentrations is the concentration per litre of a solution comprised of said blood sample or blood-derived sample and said reagent, when said blood sample or blood-derived sample is in said consumable closed tube (60).

18. The method according to any of the preceding claims, wherein said particles are latex particles.

19. The method according to any of the preceding claims, wherein said diameter of each of said particles is $4.0 \pm 0.5$ microns.

20. The method according to any of the preceding claims, wherein, when said blood sample or blood-derived sample is in said consumable closed tube (60), said known number of particles is $10,000 \pm 1,000$ per $\mu$l of a solution comprised of said reagent and said blood sample or blood-derived sample.

**Patentansprüche**

1. Verfahren zur Analyse einer Blutprobe oder einer blutbasierten Probe unter Verwendung eines durchflusszytometriebasierten hämatologischen Systems mit einem optischen Detektionssystem, wobei das Verfahren umfasst:

Vorsehen einer verbrauchbaren geschlossenen Röhre (60), welche an einem Ende davon ein Septum aufweist, welches mit einer Nadel durchstechbar ist, wobei die Röhre umfasst:

eine bekannte Anzahl von Referenzpartikeln, wobei jedes dieser Referenzpartikel einen bestimmten Durchmesser aufweist und von den Zielzellen der Blutprobe oder der blutbasierten Probe unterscheidbar ist, basierend auf zumindest einer optischen Messung aus einer Extinktionsmessung, aus einer geringwinkeligen Vorwärtslichtstreumessung, aus einer rechtwinkeligen Streumessung, aus einer weitwinkeligen Vorwärtslichtstreumessung, oder aus einer Flugzeitmessung; und
zumindest ein Reagenz, zur Ermöglichung der Bestimmung der zellularen Zusammensetzung der Blutprobe oder der blutbasierten Probe, wobei das zumindest eine Reagenz zumindest einen Farbstoff umfasst;

Durchstechen des Septums mit einer Nadel (11) und aliquotieren eines ersten Teils des Vollblutes und eines bekannten Volumens von einer Mantellösung in die verbrauchbare geschlossene Röhre (60) mittels der Nadel (11), wobei der erste Teil des Vollblutes, das bekannte Volumen der Mantellösung, die Referenzpartikel und das zumindest eine Reagenz eine erste Lösung bilden;

Herausziehen eines bekannten Volumens der ersten Lösung aus der verbrauchbaren geschlossenen Röhre (60) in das optische Detektionssystem mittels der Nadel (11);

Verwendung des optischen Detektionssystems zur Messung der Lichtstreuung und der Lichtabsorption für individuelle rote Blutzellen, für Blutplättchen und für die Referenzpartikel innerhalb des bekannten Volumens der ersten Lösung sowie zur Messung der Lichtabsorption des zumindest einen Farbstoffes innerhalb des bekannten Volumens der ersten Lösung;

Aliquotieren eines zweiten Teils des Blutes und eines Volumens der Mantellösung in die verbrauchbare geschlossene Röhre (60) mittels der Nadel (11);

Aliquotieren einer Teilprobe von Lyse in die verbrauchbare geschlossene Röhre (60) mittels der Nadel (11), wobei der Inhalt der verbrauchbaren geschlossenen Röhre (60) und die Lyse eine zweite Lösung ausbilden;

Herausziehen eines bekannten Volumens der zweiten Lösung in das optische Detektionssystem mittels der Nadel (11);

Verwendung des optischen Detektionssystems zur Messung der Lichtstreuung und der Lichtabsorption für individuelle weisse Blutzellen, für die Referenzpartikel und für den zumindest einen Farbstoff innerhalb des bekannten Volumens der zweiten Lösung.

2. Verfahren nach Anspruch 1, wobei der Durchmesser von jedem der Referenzpartikel zwischen 1 Mikrometer und 10 Mikrometer liegt.

3. Verfahren nach irgendeinem der vorherigen Ansprüche, wobei, wenn die Blutprobe oder die blutbasierte Probe sich in der verbrauchbaren geschlossenen Röhre (60) befindet, die bekannte Anzahl der Referenzpartikel zwischen etwa $10^3$ und etwa $10^5$ pro $\mu$l einer Lösung liegt, die sich aus dem Reagenz und aus der Blutprobe oder aus der blutbasierten Probe zusammensetzt.

4. Verfahren nach irgendeinem der vorherigen Ansprüche, wobei die Referenzpartikel ausgewählt sind aus der Gruppe bestehend aus Latexpartikeln, fixierten Zellen, Pollen, Glas, sowie große Kolloide.

5. Verfahren nach irgendeinem der vorherigen Ansprüche, wobei das Reagenz derart wirksam ist, dass es das durchflusszytometriebasierte hämatologische System in die Lage versetzt, zumindest entweder die roten Blutzellen oder die Retikulozyten in einer Blutprobe oder eine blutbasierten Probe zu zählen.

6. Verfahren nach irgendeinem der vorherigen Ansprüche, wobei das Reagenz ein Reaktionsmittel umfasst, welches dazu in der Lage ist Ribonukleinsäure (RNA) in Retikulozyten zu wandeln.

7. Verfahren nach Anspruch 6, wobei das Reaktionsmittel, welches dazu in der Lage ist, Ribonukleinsäure (RNA) in Retikulozyten zu wandeln, neues Methylenblau ist.

8. Verfahren nach Anspruch 7, wobei, wenn die Blutprobe oder die blutbasierte Probe sich in der verbrauchbaren geschlossenen Röhre (60) befindet, das neue Methylenblau in einer Konzentration von zwischen etwa 0,1 und etwa 0,5 Gramm pro Liter einer Lösung vorliegt, die sich aus dem Reagenz und aus der Blutprobe oder aus der blutbasierten Probe zusammensetzt.

9. Verfahren nach irgendeinem der vorherigen Ansprüche, wobei das Reagenz ein Reaktionsmittel umfasst, welches dazu in der Lage ist, die Form von roten Blutzellen zu modifizieren, dabei aber die roten Blutzellen anderweitig im Wesentlichen intakt lässt.

10. Verfahren nach Anspruch 9, wobei das Reaktionsmittel, welches dazu in der Lage ist, die Form der roten Blutzellen zu modifizieren, dabei aber die roten Blutzellen anderweitig im Wesentlichen intakt lässt, Plurafac-A-39-Pric ist.

11. Verfahren nach Anspruch 10, wobei, wenn sich die Blutprobe oder die blutbasierte Probe in der verbrauchbaren geschlossenen Röhre (60) befindet, das Plurafac-A-39-Pric in einer Konzentration von zwischen 0,1 bis 0,6 Gramm pro Liter einer Lösung vorliegt, die sich aus dem Reagenz und aus der Blutprobe oder aus der blutbasierten Probe zusammensetzt.

12. Verfahren nach irgendeinem der vorherigen Ansprüche, wobei das Reagenz neues Methylenblau und das Plurafac-A-39-Pric umfasst.

**13.** Verfahren nach Anspruch 12, wobei, wenn sich die Blutprobe oder die blutbasierte Probe in der verbrauchbaren geschlossenen Röhre (60) befindet, das neue Methylenblau in einer Konzentration von zwischen 0,1 bis 0,5 Gramm pro Liter einer Lösung vorliegt, die sich aus dem Reagenz und aus der Blutprobe oder aus der blutbasierten Probe zusammensetzt, sowie das Plurafac-A-39-Pric in einer Konzentration von zwischen 0,1 bis 0,6 Gramm pro Liter einer Lösung vorliegt, die sich aus dem Reagenz und aus der Blutprobe oder aus der blutbasierten Probe zusammensetzt.

**14.** Verfahren nach irgendeinem der vorherigen Ansprüche, wobei das Reagenz umfasst:

a) neues Methylenblau, mit einer Konzentration zwischen etwa 0,1 bis etwa 0,5 Gramm pro Liter;
b) Plurafac-A-39-Pric, mit einer Konzentration zwischen etwa 0,1 bis etwa 0,6 Gramm pro Liter;
c) Natriumbikarbonat, mit einer Konzentration zwischen etwa 6,0 bis etwa 10,0 Gramm pro Liter;
d) Natriumchlorid, mit einer Konzentration zwischen etwa 1,0 und etwa 5,0 Gramm pro Liter;
e) Tricin, mit einer Konzentration zwischen etwa 0,5 und etwa 3,0 Gramm pro Liter;
f) Dinatrium EDTA, mit einer Konzentration zwischen etwa 0,5 und etwa 3,0 Gramm pro Liter;
g) Ethylparaben, mit einer Konzentration zwischen etwa 0,1 und etwa 0,5 Gramm pro Liter; und
h) Methylparaben, mit einer Konzentration zwischen etwa 0,1 und etwa 0,3 Gramm pro Liter,

wobei jede dieser Konzentrationen die Konzentration pro Liter von einer Lösung ist, die sich aus der Blutprobe oder aus der blutbasierten Probe und aus dem Reagenz zusammensetzt, wenn sich die Blutprobe oder wenn sich die blutbasierte Probe in der verbrauchbaren geschlossenen Röhre (60) befindet.

**15.** Verfahren nach irgendeinem der vorherigen Ansprüche, wobei das Reagenz derart wirksam ist, dass es die Messung von zumindest einer Zählung der weissen Blutzellen und/oder eines fünfteiligen weissen Blutzellen-Differentialblutbilds und/oder des Hämoglobin-Niveaus ermöglicht.

**16.** Verfahren nach irgendeinem der vorherigen Ansprüche, wobei das Reagenz Saponin umfasst, mit einer Konzentration von zwischen 6,0 bis 20,0 Gramm pro Liter der Lösung, bestehend aus dem Reagenz und aus der Blutprobe oder aus der blutbasierten Probe, wenn sich die Blutprobe oder die blutbasierte Probe in der verbrauchbaren geschlossenen Röhre (60) befindet.

**17.** Verfahren nach irgendeinem der vorherigen Ansprüche, weiterhin mit:

a) Natriumsulfat, mit einer Konzentration von zwischen 10,0 und 16,0 Gramm pro Liter;
b) Dinatrium EDTA, mit einer Konzentration zwischen 0,5 und 3,0 Gramm pro Liter;
c) einem konservierenden PROCLIN 300, mit einer Konzentration zwischen 0,1 und 1,0 Gramm pro Liter; und
d) einem konservierenden Germabox II, mit einer Konzentration zwischen 0,5 und 3,0 ml pro Liter,

wobei jede dieser Konzentrationen die Konzentration pro Liter von einer Lösung ist, die sich aus der Blutprobe oder aus der blutbasierten Probe und aus dem Reagenz zusammensetzt, wenn sich die Blutprobe oder wenn sich die blutbasierte Probe in der verbrauchbaren geschlossenen Röhre (60) befindet.

**18.** Verfahren nach irgendeinem der vorherigen Ansprüche, wobei die Partikel Latexpartikel sind.

**19.** Verfahren nach irgendeinem der vorherigen Ansprüche, wobei der Durchmesser von jedem der Partikel $4,0 \pm 0,5$ Mikrometer ist.

**20.** Verfahren nach irgendeinem der vorherigen Ansprüche, wobei, wenn sich die Blutprobe oder wenn sich die blutbasierte Probe in der verbrauchbaren geschlossenen Röhre (60) befindet, die bekannte Anzahl der Partikel $10.000 \pm 1.000$ pro $\mu$l einer Lösung ist, die sich aus dem Reagenz und aus der Blutprobe oder aus der blutbasierten Probe zusammensetzt.

**Revendications**

**1.** Méthode d'analyse d'un échantillon de sang ou d'un échantillon dérivé du sang utilisant un système d'hématologie basé sur une cytométrie de flux comprenant un système de détection optique, laquelle méthode consiste à :

disposer d'un tube fermé consommable (60) ayant, à une extrémité de celui-ci, un septum pouvant être percé par une aiguille, ledit tube contenant :

un nombre connu de particules de référence, chacune desdites particules de référence ayant un diamètre prédéterminé et pouvant être distinguée des cellules cibles de l'échantillon de sang ou de l'échantillon dérivé du sang sur la base d'au moins une mesure optique parmi une mesure d'extinction, une mesure de prodiffusion de lumière en petit angle, une mesure de prodiffusion de lumière en angle droit, une mesure de prodiffusion de lumière en grand angle, et une mesure de temps de vol ; et
au moins un réactif pour permettre la détermination de la composition cellulaire de l'échantillon de sang ou de l'échantillon dérivé du sang, l'au moins un réactif comprenant au moins un colorant ;

percer le septum avec une aiguille (11) et aliquoter une première portion de sang entier et un volume connu de solution de gainage dans le tube fermé consommable (60) via l'aiguille (11), la première portion de sang entier, le volume connu de solution de gainage, les particules de référence et l'au moins un réactif formant une première solution ;
aspirer un volume connu de la première solution hors du tube fermé consommable (60) dans le système de détection optique via l'aiguille (11) ;
utiliser le système de détection optique pour mesurer la diffusion de lumière et l'absorption de lumière pour des globules rouges individuels, des plaquettes et les particules de référence à l'intérieur du volume connu de la première solution et pour mesurer l'absorption de lumière pour l'au moins un colorant à l'intérieur du volume connu de la première solution ;
aliquoter une deuxième portion de sang et un volume de solution de gainage dans le tube fermé consommable (60) via l'aiguille (11) ;
aliquoter une aliquote de lyse dans le tube consommable (60), via l'aiguille (11), les contenus du tube fermé consommable (60) et de la lyse formant une deuxième solution ;
aspirer un volume connu de la deuxième solution dans le système de détection optique via l'aiguille (11) ;
utiliser le système de détection optique pour mesurer la diffusion de lumière et l'absorption de lumière pour des globules blancs individuels, les particules de référence et l'au moins un colorant à l'intérieur du volume connu de la deuxième solution.

2. Méthode selon la revendication 1, dans laquelle ledit diamètre de chacune desdites particules de référence est compris entre 1 micromètre et 10 micromètres.

3. Méthode selon l'une quelconque des revendications précédentes, dans laquelle, quand l'échantillon de sang ou l'échantillon dérivé du sang est dans ledit tube fermé consommable (60), ledit nombre connu de particules de référence est compris entre environ $10^3$ et environ $10^5$ par $\mu$l de solution constituée dudit réactif et dudit échantillon de sang ou échantillon dérivé du sang.

4. Méthode selon l'une quelconque des revendications précédentes, dans laquelle lesdites particules de référence sont choisies dans le groupe constitué par les particules de latex, les cellules fixées, le pollen, le verre, et les gros colloïdes.

5. Méthode selon l'une quelconque des revendications précédentes, dans laquelle ledit réactif est efficace pour permettre audit système d'hématologie basé sur une cytométrie de flux de compter au moins l'un parmi les globules rouges et les réticulocytes dans un échantillon de sang ou un échantillon dérivé du sang.

6. Méthode selon l'une quelconque des revendications précédentes, dans laquelle ledit réactif comprend un réactif capable de colorer l'acide ribonucléique [ARN] dans les réticulocytes.

7. Méthode selon la revendication 6, dans laquelle ledit réactif capable de colorer l'acide ribonucléique [ARN] dans les réticulocytes est le nouveau bleu de méthylène.

8. Méthode selon la revendication 7, dans laquelle, quand l'échantillon de sang ou l'échantillon dérivé du sang est dans ledit tube fermé consommable (60), ledit nouveau bleu de méthylène est présent à une concentration comprise entre environ 0,1 et environ 0,5 gramme par litre de solution constituée dudit réactif et dudit échantillon de sang ou échantillon dérivé du sang.

9. Méthode selon l'une quelconque des revendications précédentes, dans laquelle ledit réactif comprend un réactif capable de modifier la forme des globules rouges mais en laissant par ailleurs lesdits globules rouges pratiquement intacts.

**10.** Méthode selon la revendication 9, dans laquelle ledit réactif capable de modifier la forme des globules rouges mais en laissant par ailleurs lesdits globules rouges pratiquement intacts est le Plurafac-A-39-Pric.

**11.** Méthode selon la revendication 10, dans laquelle, quand l'échantillon de sang ou l'échantillon dérivé du sang est dans ledit tube fermé consommable (60), ledit Plurafac-A-39-Pric est présent à une concentration comprise entre environ 0,1 et environ 0,6 gramme par litre de solution constituée dudit réactif et dudit échantillon de sang ou échantillon dérivé du sang.

**12.** Méthode selon l'une quelconque des revendications précédentes, dans laquelle ledit réactif comprend du nouveau bleu de méthylène et ledit Plurafac-A-39-Pric.

**13.** Méthode selon la revendication 12, dans laquelle, quand l'échantillon de sang ou l'échantillon dérivé du sang est dans ledit tube fermé consommable (60), ledit nouveau bleu de méthylène est présent à une concentration comprise entre environ 0,1 et environ 0,5 gramme par litre de solution constituée dudit réactif et dudit échantillon de sang ou échantillon dérivé du sang, et ledit Plurafac-A-39-Pric est présent à une concentration comprise entre environ 0,1 et environ 0,6 gramme par litre de solution constituée dudit réactif et dudit échantillon de sang ou échantillon dérivé du sang.

**14.** Méthode selon l'une quelconque des revendications précédentes, dans laquelle ledit réactif comprend :

a) du nouveau bleu de méthylène, à une concentration comprise entre environ 0,1 et environ 0,5 gramme par litre ;
b) du Plurafac-A-39-Pric, à une concentration comprise entre environ 0,1 et environ 0,6 gramme par litre ;
c) du bicarbonate de sodium, à une concentration comprise entre environ 6,0 et environ 10,0 grammes par litre ;
d) du chlorure de sodium, à une concentration comprise entre environ 1,0 et environ 5,0 grammes par litre ;
e) de la tricine, à une concentration comprise entre environ 1,0 et environ 5,0 grammes par litre ;
f) de l'EDTA disodique, à une concentration comprise entre environ 0,5 et environ 3,0 grammes par litre ;
g) de l'éthylparaben, à une concentration comprise entre environ 0,1 et environ 0,5 gramme par litre ; et
h) du méthylparaben, à une concentration comprise entre environ 0,1 et environ 0,3 gramme par litre,

dans laquelle chacune desdites concentrations est la concentration par litre de solution constituée dudit échantillon de sang ou échantillon dérivé du sang et dudit réactif, quand ledit échantillon de sang ou échantillon dérivé du sang est dans ledit tube fermé consommable (60).

**15.** Méthode selon l'une quelconque des revendications précédentes, dans laquelle ledit réactif est efficace pour permettre la mesure d'au moins l'un parmi le compte des globules blancs, un différentiel des globules blancs en cinq parties, et le taux d'hémoglobine.

**16.** Méthode selon l'une quelconque des revendications précédentes, dans laquelle ledit réactif comprend de la saponine, à une concentration comprise entre 6,0 et 20,0 grammes par litre de la solution dudit réactif et dudit échantillon de sang ou échantillon dérivé du sang, quand ledit échantillon sang ou échantillon dérivé du sang est dans ledit tube fermé consommable (60).

**17.** Méthode selon l'une quelconque des revendications précédentes, comprenant en outre :

a) du sulfate de sodium, à une concentration comprise entre 10,0 et 16,0 grammes par litre ;
b) de l'EDTA disodique, à une concentration comprise entre 0,5 et 3,0 grammes par litre ;
c) le conservateur ProClin 300, à une concentration comprise entre 0,1 et 1,0 gramme par litre ; et
d) le conservateur Germabox II, à une concentration comprise entre 0,5 et 3,0 ml par litre,

dans laquelle chacune desdites concentrations est la concentration par litre de solution constituée dudit échantillon de sang ou échantillon dérivé du sang et dudit réactif, quand ledit échantillon de sang ou échantillon dérivé du sang est dans ledit tube fermé consommable (60).

**18.** Méthode selon l'une quelconque des revendications précédentes, dans laquelle lesdites particules sont des particules de latex.

**19.** Méthode selon l'une quelconque des revendications précédentes, dans laquelle ledit diamètre de chacune desdites particules est de 4,0 $\pm$ 0,5 micromètres.

**20.** Méthode selon l'une quelconque des revendications précédentes, dans laquelle, quand ledit échantillon de sang ou échantillon dérivé du sang est dans ledit tube fermé consommable (60), ledit nombre connu de particules est de 10 000 $\pm$ 1 000 par $\mu$l de solution constituée dudit réactif et dudit échantillon de sang ou échantillon dérivé du sang.

*Fig. 1*

*Fig. 2*

Fig. 3A

Fig. 3B

*Fig. 4*

50

52

53

51

*Fig. 5*

Analyze Retic/RBC/PLT

Analyze WBC/Diff/HGB

Add/
Sheath(Wash)
Sheath/Blood

Add Sheath
(Wash)

Consumable

Add Blood/Sheath

Add Lyse/Sheath

60

61

62

63

64

*Fig. 6*

A

B

C

D

70

*Fig. 7*

Fig. 8

*Fig. 9*

# FIG. IOA.

# FIG. IOB.

FIG. IOC.

FIG. IOD.

38

*Fig.11A*

*Fig.11B*

FIG. 12A.

FIG. 12B.

FIG. 12C.

FIG. 12D.

FIG. 12E.

FIG. 12F.

## Fig.13A

RAS INT

## Fig.13B

FSL

# FIG. 14 A.

# FIG. 14B.

*Fig.15*

## FIG. 16A.

## FIG. 16B.

*Fig.17*

## FIG. 18.

## FIG. 19A.

## FIG. 19B.

## FIG. 20.

## FIG. 21.

# FIG. 22.

FIG. 23A.

Tek Stop: 25.0kS/s    250 Acqs

Ch I  200mV                    M2.00ms    Ch 3 \    -600mV
SPECTRUM WITH SINGLE MODE OPERATION

FIG. 23B.

Tek Stop: 25.0kS/s    326 Acqs

Ch I  200mV                    M2.00ms    Ch 3 \    -600mV
SPECTRUM WITH HFM OPERATION

FIG. 24.

% RMS NOISE (10Hz-5MHz) vs TEMP

STANDARD
HMF

EP 1 297 334 B1

53

FIG. 25.

EP 1 297 334 B1

THRESHOLDS

FROM PREAMP X4 → LPF → VARIABLE GAIN & DC RESTORE

ACTIVE CLAMP → TIMING → TIMING SIGNALS

X4 → PEAK DETECT

INTEGRATE

X → A/D → FIFO

LOGIC → DACS → THRESHOLDS

LVDS → TO CPU

FIG. 26.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5047321 A, Loken
- US 50751500 A
- US 507515 A
- US 5492833 A, Rodriguez
- US 5559037 A, Kim
- US 5733784 A, Studholme
- US 5879900 A, Kim
- US 5891734 A, Gill
- US 5627037 A, Ward
- US 5380663 A, Schwartz
- US 5451525 A, Shenkin
- US 5093234 A
- US 6612719 B